# EUROPEAN PATENT SPECIFICATION

(11) **EP 4 383 414 B1**
(45) Date of publication and mention of the grant of the patent: **18.11.2026**
(21) Application number: 23843438.5
(22) Date of filing: 21.07.2023
(51) Int. Cl.: H01M 50/184, H01M 50/193, H01M 50/179, H01M 50/559, H01M 50/167, H01M 50/213, H01M 50/249, H01M 50/186, H01M 50/188, H01M 50/562, H01M 50/566

(54) **FIXING STRUCTURE OF ELECTRODE TERMINAL, AND BATTERY, BATTERY PACK AND VEHICLE INCLUDING THE SAME**
BEFESTIGUNGSSTRUKTUR EINES ELEKTRODENANSCHLUSSES UND BATTERIE, BATTERIEPACK UND FAHRZEUG DAMIT
STRUCTURE DE FIXATION DE BORNE D'ÉLECTRODE, AINSI QUE BATTERIE, BATTERIE À PLUSIEURS ÉLÉMENTS ET VÉHICULE COMPRENANT CELLE-CI

(30) Priority: 21.07.2022 KR 20220090644
(43) Date of publication of application: 12.06.2024
(73) Proprietor: LG Energy Solution, Ltd., Seoul 07335 (KR)
(72) Inventor: OH, Jeong-Seop, Daejeon 34122 (KR); KANG, Bo-Hyun, Daejeon 34122 (KR); KIM, Do-Gyun, Daejeon 34122 (KR); LIM, Gu-Min, Daejeon 34122 (KR); JO, Min-Ki, Daejeon 34122 (KR); HWANGBO, Kwang-Su, Daejeon 34122 (KR); LEE, Seon-Min, Daejeon 34122 (KR); CHUNG, Gu-Jin, Daejeon 34122 (KR)
(74) Representative: Goddar, Heinz J.
(86) International application number: PCT/KR2023/010607
(87) International publication number: WO 2024/019592

(56) References cited:
- CN-A- 113 258 124
- CN-U- 215 342 666
- KR-A- 20150 102 226
- KR-A- 20170 116 370
- KR-B1- 102 285 978
- US-A1- 2021 280 835

## Description

### TECHNICAL FIELD

The present disclosure relates to a fixing structure of an electrode terminal, and a battery, a battery pack and a vehicle including the same.

### BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing together with the electrolyte to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing.

However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 (diameter: 18 mm, height: 65 mm) or a form factor 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

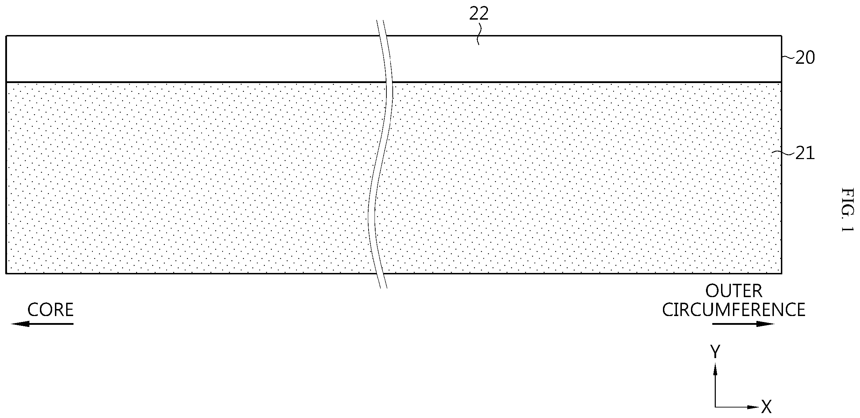

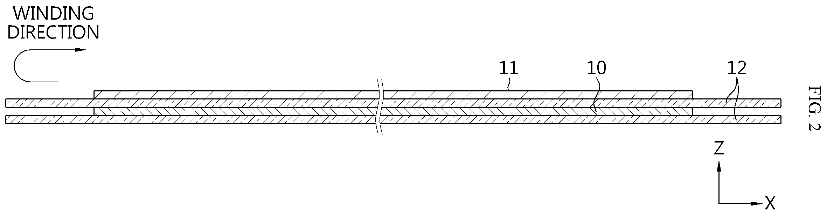

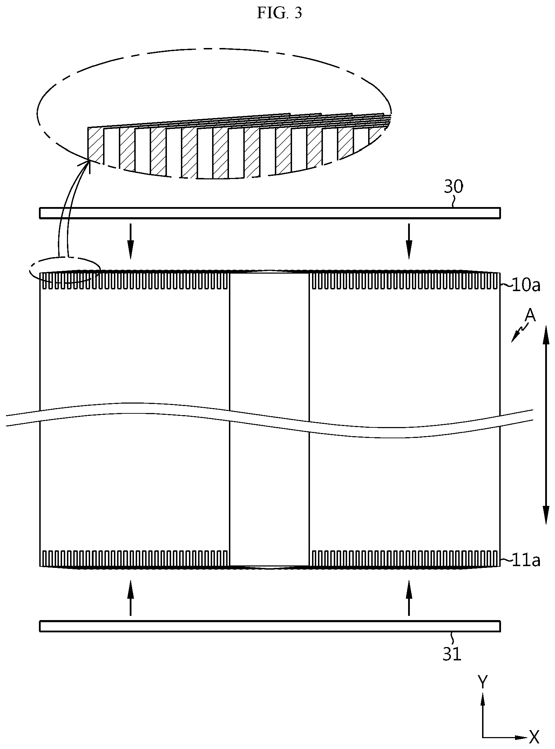

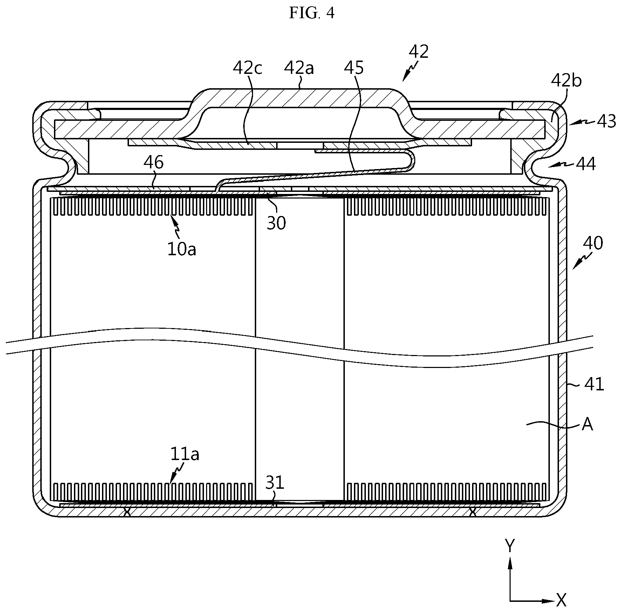

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collector to a bent surface of an uncoated portion. FIG. 4 is a cross-sectional view showing the tab-less cylindrical battery, taken along the longitudinal direction Y.

Referring to FIGS. 1 to 4, a positive electrode 10 and a negative electrode 11 have a structure in which a sheet-shaped current collector 20 is coated with an active material layer 21, and include an uncoated portion 22 at one long side along the winding direction X.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions.

After the winding process, the uncoated portion 10a of the positive electrode 10 and the uncoated portion 11a of the negative electrode 11 are bent toward the core. After that, current collectors 30, 31 are welded and coupled to the uncoated portions 10a, 11a, respectively.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

However, as the form factor of the cylindrical battery increases and the magnitude of the charging current during fast charging increases, heat generation problems also occur in tab-less cylindrical batteries.

Specifically, the conventional tab-less cylindrical battery 40 includes a battery housing 41 and a sealing body 42 as shown in FIG. 4. The battery housing 41 is called a battery can. The sealing body 42 includes a cap 42a, a sealing gasket 42b, and a connection plate 42c. The sealing gasket 42b surrounds the edge of the cap 42a and is fixed by a crimping portion 43. Also, the electrode assembly A is fixed within the battery housing 41 by a beading portion 44 to prevent up and down movement.

Typically, the positive electrode terminal is the cap 42a of the sealing body 42, and the negative electrode terminal is the battery housing 41. Accordingly, the current collector 30 coupled to the uncoated portion 10a of the positive electrode 10 is electrically connected to a connection plate 42c attached to the cap 42a through a strip-shaped lead 45. Also, the current collector 31 coupled to the uncoated portion 11a of the negative electrode 11 is electrically connected to the bottom portion of the battery housing 41. The insulator 46 covers the current collector 30 to prevent the battery housing 41 and the uncoated portion 10a of the positive electrode 10 having different polarities from contacting each other and causing a short circuit.

When the current collector 30 is connected to the connection plate 42c, the strip-shaped lead 45 is used. The lead 45 is attached separately to the current collector 30 or manufactured integrally with the current collector 30. However, since the lead 45 is in the form of a thin strip, its sectional area is small, so a lot of heat is generated when the fast charging current flows. Also, excessive heat generated from the lead 45 may be transferred to the electrode assembly A and shrink the separator 12, which may cause an internal short circuit that is the main cause of thermal runaway.

The lead 45 also occupies a considerable installation space within the battery housing 41. Therefore, the cylindrical battery 40 including the lead 45 has low space efficiency and has limitations in increasing energy density.

In addition, the top of the crimping portion 43 has negative polarity, but has a small area. In the drawings, the crimping portion 43 is shown large, but in reality, the top of the crimping portion 43 has a very small area, compared to the sealing body 42. Therefore, in order to stably connect bus bar components, there is no choice but to connect the positive electrode to the sealing body 42 crimped to the open end of the battery housing 40 and connect the negative electrode to the bottom portion of the battery housing 40.

As such, in order to connect the conventional tab-less cylindrical batteries 40 in series and/or parallel, bus bar components must be connected to the cap 42a of the sealing body 42 and the bottom portion of the battery housing 41, which reduces space efficiency. The battery pack mounted in an electric vehicle includes hundreds of cylindrical batteries 40. Therefore, inefficiencies in electrical wiring cause significant inconvenience during the assembly process of the electric vehicle and during the maintenance of the battery pack.

KR 20170116370 A describes various embodiments of a secondary battery designed to prevent unintended electrical short circuits between a cylindrical can and a cap assembly. The secondary battery includes: a cylindrical can; an electrode assembly accommodated within the can together with an electrolyte; a cap assembly sealing the open end of the can; and an insulating layer formed on the surface of the cap assembly that is exposed externally through the cylindrical can. The invention further specifies that the top height of the cap assembly is equal to or lower than the top height of the cylindrical can. This configuration enhances electrical insulation and reduces the likelihood of short-circuit events.

### SUMMARY

### Technical Problem

The present disclosure is designed to solve the problems of the related art, and therefore the present disclosure is directed to lowering the inner resistance of a cylindrical battery and increasing energy density by improving an electrode terminal structure of the cylindrical battery to increase space efficiency within the battery housing.

The present disclosure is also directed to solving the internal heat generation problem that occurs during fast charging by improving the electrode terminal structure of the cylindrical battery to expand the sectional area of a current path.

The present disclosure is also directed to improving sealing properties along with the improvement of the electrode terminal structure the cylindrical battery.

The present disclosure is also directed to providing a cylindrical battery with an improved structure in which the electrical wiring work for series and/or parallel connection of cylindrical batteries may be performed at one side of the cylindrical battery.

The present disclosure is also directed to providing a battery pack manufactured using the cylindrical battery with an improved structure and a vehicle including the same.

However, the technical objects to be solved by the present disclosure are not limited to the above, and other objects not mentioned herein will be clearly understood by those skilled in the art from the following disclosure.

### Technical Solution

The invention is defined by the subject matter of the independent claims. Advantageous embodiments are subject to the dependent claims.

In one aspect of the present disclosure, there is provided a fixing structure of an electrode terminal, comprising: a battery housing having an open end and a bottom portion in which a perforation hole is formed; an electrode terminal installed through the perforation hole not to contact an inner wall of the perforation hole; and a terminal gasket interposed between the electrode terminal and the perforation hole. A hot-melt layer is interposed at the interface between the electrode terminal and the terminal gasket or the interface between the terminal gasket and the battery housing.

The electrode terminal may include a body portion inserted into the perforation hole; an outer flange portion configured to extend from a first side of the body portion along an outer surface of the bottom portion of the battery housing; and an inner flange portion configured to at least partially extend from a second side of the body portion to face the bottom portion of the battery housing.

A welding portion may be provided on an inner side of the inner flange portion.

The welding portion may have a flat surface.

The terminal gasket may include an outer gasket interposed between the outer flange portion and a first plane where the outer surface of the bottom portion of the battery housing is located; an inner gasket interposed between the inner flange portion and a second plane where an inner surface of the bottom portion of the battery housing is located; and an intermediate gasket interposed between the body portion and the perforation hole and configured to connect the outer gasket and the inner gasket.

The hot-melt layer may be located at the interface between the inner flange portion and the inner gasket and is at least partially exposed.

The hot-melt layer may be located at the interface between the outer flange portion and the outer gasket and is at least partially exposed.

The hot-melt layer may be located at the interface between the outer gasket and the first plane and is at least partially exposed.

The hot-melt layer may be located at the interface between the inner gasket and the second plane and is at least partially exposed.

The hot-melt layer may be formed by hardening a hot-melt film with heat.

The hot-melt layer may be formed by hardening a hot-melt coating layer with heat.

The hot-melt layer may be made of silicone-based, epoxy-based, acrylic-based or urethane-based hot-melt material.

The hot-melt layer may have a thickness of several µm several hundred µm.

In another aspect of the present disclosure, there is also provided a battery, comprising: an electrode assembly in which a first electrode and a second electrode are wound with a separator interposed therebetween; a battery housing configured to accommodate the electrode assembly and electrically connected to the first electrode; an electrode terminal installed through a perforation hole formed in a bottom portion of the battery housing not to contact an inner wall of the perforation hole and electrically connected to the second electrode, the electrode terminal including: a body portion inserted into the perforation hole; an outer flange portion configured to extend from a first side of the body portion along an outer surface of the bottom portion of the battery housing; and an inner flange portion configured to at least partially extend from a second side of the body portion to face an inner surface of the bottom portion of the battery housing; a terminal gasket interposed between the electrode terminal and the perforation hole; and a sealing body configured to seal an open end of the battery housing to enable insulation from the battery housing, wherein a hot-melt layer is interposed at the interface between the electrode terminal and the terminal gasket or the interface between the terminal gasket and the battery housing.

The electrode terminal may include a welding portion on an inner side of the inner flange portion. The welding portion may have a flat surface.

In still another aspect of the present disclosure, there is also provided a battery pack comprising a plurality of batteries described above, and a vehicle comprising the battery pack.

### Advantageous Effects

According to an aspect of the present disclosure, it is possible to lower the inner resistance of a battery and increase energy density by improving an electrode terminal structure of the battery to increase space efficiency within the battery housing.

According to another aspect of the present disclosure, the sealing performance of the electrode terminal may be improved by applying a hot-melt layer to the electrode terminal structure.

According to still another aspect of the present disclosure, it is possible to solve the internal heat generation problem that occurs during fast charging by improving the electrode terminal structure of the battery to expand the sectional area of a current path.

According to still another aspect of the present disclosure, the electrical wiring work for series and/or parallel connection of batteries may be performed at one side of the battery.

According to still another aspect of the present disclosure, it is possible to provide a battery pack manufactured using the battery with an improved structure and a vehicle including the same.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used for a conventional tab-less cylindrical battery.
FIG. 2 is a diagram showing a process of winding an electrode assembly included in the conventional tab-less cylindrical battery.
FIG. 3 is a diagram showing a process of welding a current collector to a bent surface of an uncoated portion in the electrode assembly of FIG. 2.
FIG. 4 is a cross-sectional view showing the conventional tab-less cylindrical battery, taken along the longitudinal direction Y.
FIG. 5 is a cross-sectional view showing a fixing structure of an electrode terminal according to an embodiment of the present disclosure.
FIG. 6a is an enlarged cross-sectional view showing the portion indicated by a dotted circle in FIG. 5.
FIG. 6b is a partially enlarged cross-sectional view schematically showing a fixing structure of an electrode terminal according to another embodiment of the present disclosure.
FIG. 6c is a plan view schematically showing a welding pattern formed on a flat portion of the electrode terminal according to an embodiment of the present disclosure.
FIG. 6d is a photograph showing the surface of a cylindrical battery with the electrode terminal exposed after performing a thermal shock cycle test.
FIG. 6e is a photograph showing the results of measuring the interval between a terminal gasket and the electrode terminal before and after the thermal shock cycle test.
FIG. 6f is a cross-sectional view showing the improved structure of the electrode terminal to solve the electrolyte leakage problem identified in the thermal shock cycle experiment.
FIG. 7a is a sectional view showing the cylindrical battery according to an embodiment of the present disclosure, taken along the longitudinal direction Y.
FIG. 7b is a sectional view showing a cylindrical battery according another embodiment of the present disclosure, taken along the longitudinal direction Y.
FIG. 8 is a plan view exemplarily showing an electrode structure according to a preferred embodiment of the present disclosure.
FIG. 9 is a cross-sectional view showing an electrode assembly in which a segmental structure of an uncoated portion of the electrode according to an embodiment of the present disclosure is applied to a first electrode and a second electrode, taken along a longitudinal direction Y.
FIG. 10a is a cross-sectional view showing the electrode assembly with the uncoated portion bent according to an embodiment of the present disclosure, taken along the longitudinal direction Y.
FIG. 10b is a perspective view showing the electrode assembly with the uncoated portion bent according to an embodiment of the present disclosure.
FIG. 11 is a top plan view showing a plurality of cylindrical batteries connected in series and parallel using a bus bar according to an embodiment of the present disclosure.
FIG. 12a is an enlarged view showing a portion of FIG. 11.
FIGS. 12b and 12c are diagrams exemplarily showing parameters used to define the diameter of the electrode terminal and the exposure width of the outer surface of the bottom portion of the battery housing according to an embodiment of the present disclosure.
FIG. 13 is a diagram schematically showing a battery pack including the cylindrical batteries according to an embodiment of the present disclosure.
FIG. 14 is a diagram schematically showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Also, to aid understanding of the present disclosure, the attached drawings are not drawn to scale and the dimensions of some components may be exaggerated. In addition, the same reference symbols may be assigned to the same components in different embodiments.

Stating that two objects of comparison are 'the same' means that they are 'substantially the same'. Therefore, the term 'substantially the same' may include a deviation that is considered low in the art, for example, a deviation of less than 5%. Also, uniformity of a parameter in a region may mean that the parameter is uniform from an average perspective in the corresponding region.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

For convenience of description, a direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction. Among them, in particular, the direction that gets closer to the winding axis is referred to as a centripetal direction, and the direction that faces away from the winding axis is referred to as a centrifugal direction.

A cylindrical battery according to an embodiment of the present disclosure may include an electrode terminal installed in a perforation hole formed in the bottom portion of a battery housing.

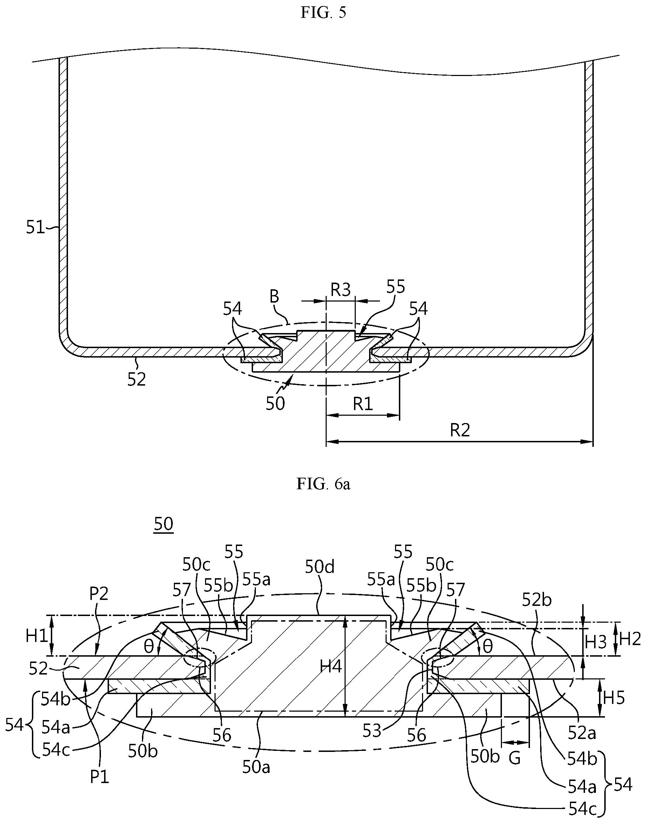

FIG. 5 is a cross-sectional view showing a fixing structure of an electrode terminal 50 according to an embodiment of the present disclosure, and FIG. 6a is an enlarged cross-sectional view showing the portion indicated by a dotted circle in FIG. 5.

Referring to FIGS. 5 and 6a, the electrode terminal 50 may include a body portion 50a having an upper surface, a lower surface and an outer surface, an outer flange portion 50b extending along the outer surface 52a of the bottom portion 52 of the battery housing 51 from the outer surface of the body portion 50a, and an inner flange portion 50c extending from the outer surface of the body portion 50a to at least partially face the inner surface 52b of the bottom portion 52 of the battery housing 51. The upper surface of the body portion 50a may be flat and be connected to the current collector, and is located above the inner flange portion 50c.

The fixing structure of the electrode terminal 50 according to an embodiment of the present disclosure may be applied to the structure of the cylindrical battery housing 51. Specifically, the fixing structure of the electrode terminal 50 may include a battery housing 51 having an open end, an electrode terminal 50 fixed through the perforation hole 53 formed in the bottom portion 52 of the battery housing 51, and a terminal gasket 54 interposed between the electrode terminal 50 and the perforation hole 53.

The battery housing 51 may include a cylindrical sidewall and a bottom portion 52 connected to an end of the sidewall. Since the perforation hole 53 is formed in the bottom portion 52, the battery housing 51 has a structure in which one side is open and the other side is partially closed by the bottom portion 52. The battery housing 51 may also have other shapes than the cylindrical shape, for example a prismatic shape with a rectangular cross section.

The battery housing 51 is made of a conductive metal material. In one example, battery housing 51 may be made of steel, but the present disclosure is not limited thereto. The inner and outer surfaces of the battery housing 51 may be coated with a Ni-plated layer.

The electrode terminal 50 is made of a conductive metal material. In one example, electrode terminal 50 may be made of aluminum, but the present disclosure is not limited thereto. The electrode terminal 50 may be made of 10 series aluminum alloy, which is easy to plasticize and has low resistance. Plastic working is a method of applying a physical force to metal to deform the metal into a desired shape, and may include riveting, caulking, and the like.

The terminal gasket 54 may be made of polymer resin with insulating and elastic properties. In one example, the terminal gasket 54 may be made of polypropylene, polybutylene terephthalate, polyfluoroethylene, or the like, but the present disclosure is not limited thereto.

Preferably, the electrode terminal 50 is installed in the perforation hole 53 not to contact the inner wall of the perforation hole 53.

The electrode terminal 50 includes a body portion 50a inserted into the perforation hole 53. The body portion 50a may have an upper surface, a lower surface, and an outer surface for connecting the upper surface and the lower surface to each other.

The electrode terminal 50 may include an outer flange portion 50b extending along the outer surface 52a from the periphery of the first side of the body portion 50a exposed through the outer surface 52a of the bottom portion 52 of the battery housing 51, and an inner flange portion 50c extending from the periphery of the second side of the body portion 50a exposed through the inner surface 52b of the bottom portion 52 of the battery housing 51 to at least partially face the inner surface 52b.

The electrode terminal 50 may include a flat portion 50d at the inner side of the inner flange portion 50c. The flat portion 50d is an example of a welding portion. The welding portion is a part welded to another member. The flat portion 50d may be surrounded by the inner flange portion 50c.

The flat portion 50d corresponds to the upper surface of the body portion 50a. The flat portion 50d may include a flat surface in at least a partial area. At least a partial area of the flat portion 50d may be parallel to the inner surface 52b of the bottom portion 52 of the battery housing 51. Here, the term 'parallel' means substantially parallel when observed with the naked eye. The flat portion 50d may be a surface already formed before the electrode terminal 50 is plastic-worked. That is, the flat portion 50d may be a region that is not deformed by plastic working.

Preferably, the electrode terminal 50 is made of metal, and the inner flange portion 50c may be formed by plastic-working the upper periphery of the body portion 50a. Plastic working may be caulking. However, the present disclosure is not limited thereto. In one embodiment, the electrode terminal 50 may be a rivet terminal riveted through the perforation hole 53 by the inner flange portion 50c.

The inner flange portion 50c extends gradually away from the bottom portion 52 of the battery housing 51. The angle (θ) between the surface of the inner flange portion 50c facing the bottom portion 52 of the battery housing 51 and the inner surface 52b of the bottom portion 52 of the battery housing 51 may be 0 degrees to 60 degrees.

The size of the angle (θ) is determined by the caulking strength when the electrode terminal 50 is installed in the perforation hole 53 of the battery housing 51 using the caulking method. In one example, as caulking intensity increases, the angle (θ) may decrease to 0 degrees. If the angle (θ) exceeds 60 degrees, the sealing effect of the terminal gasket 54 may be deteriorated.

Meanwhile, since the outer flange portion 50b is substantially parallel to the bottom portion 52 of the battery housing 51, the angle between the inner flange portion 50c and the outer flange portion 50b may also be 0 degrees to 60 degrees.

According to another aspect, a recess portion 55 may be provided between the inner flange portion 50c and the flat portion 50d. The recess portion 55 is a groove recessed toward the central axis of the body portion 50a. The groove may have a closed loop shape when viewed from the central axis direction of the body portion 50a. The recess portion 55 may have an asymmetric cross-section. In one example, the asymmetric cross-section may be approximately V-shaped or U-shaped. The asymmetric cross section may include a sidewall 55a of the flat portion 50d and an inclined surface 55b connected to the end of the sidewall 55a and formed by the upper surface of the inner flange portion 50c. The outer surface of the body portion 50a exposed through the sidewall 55a may be referred to as a first surface, and the inclined surface 55b may be referred to as a second surface. The first and second surfaces are asymmetrical. The sidewall 55a may be substantially perpendicular to the inner surface 52b of the bottom portion 52 of the battery housing 51. The term 'vertical' means substantial vertical when observed with the naked eye. As will be described later, the sidewall 55a may be inclined toward the flat portion 50d. The recess portion 55 is generated by the shape of the caulking jig when the electrode terminal 50 is installed in the perforation hole 53 of the battery housing 51 using the caulking method.

Preferably, the thickness of the inner flange portion 50c may decrease as being away from the body portion 50a of the electrode terminal 50.

According to another aspect, the terminal gasket 54 may include an outer gasket 54a interposed between the outer flange portion 50b and the first plane P1 where the outer surface 52a of the bottom portion 52 of the battery housing 51 is located, an inner gasket 54b interposed between the inner flange portion 50c and the second plane P2 where the inner surface 52b of the bottom portion 52 of the battery housing 51 is located, and an intermediate gasket 54c interposed between the body portion 50a and the perforation hole 53 and configured to connect the outer gasket 54a and the inner gasket 54b.

The thickness of the outer gasket 54a and/or the inner gasket 54b and/or the intermediate gasket 54c may vary depending on location.

Preferably, the thickness of the intermediate gasket 54c may vary depending on the location, and the terminal gasket 54 may have a minimum thickness at the intermediate gasket 54c.

In one aspect, the thickness of the area of the intermediate gasket 54c adjacent to the first plane P1 may increase as being closer to the first plane P1. Similarly, the thickness of the area of the intermediate gasket 54c adjacent to the second plane P2 may increase as being closer to the second plane P2. Also, the central area of the intermediate gasket 54c located between the first plane P1 and the second plane P2 may have a uniform thickness.

Preferably, among the area of the intermediate gasket 54c, the area interposed between the inner flange portion 50c and the inner edge 56 of the perforation hole 53 connected to the inner surface 52b of the bottom portion 52 of the battery housing 51 may have a relatively small thickness. Preferably, a minimum thickness point may exist in the area of the intermediate gasket 54c interposed between the inner edge 56 of the perforation hole 53 and the inner flange portion 50c. Also, the inner edge 56 of the perforation hole 53 may include an opposing surface 57 that faces the inner flange portion 50c.

Meanwhile, the top and bottom of the inner wall of the perforation hole 53, which is perpendicular to the bottom portion 52 of the battery housing 51, are chamfered (corner cutting) to form a surface tapered toward the electrode terminal 50. However, the top and/or bottom of the inner wall of the perforation hole 53 may be transformed into a smooth curved surface with curvature. In this case, the stress applied to the gasket 54 near the top and/or bottom of the inner wall of the perforation hole 53 may be further alleviated.

Preferably, the inner gasket 54b forms an angle (θ) of 0 degrees to 60 degrees with the inner surface 52b of the bottom portion 52 of the battery housing 51 and may extend longer than the inner flange portion 50c.

In another aspect, the height H1 of the flat portion 50d may be equal to or greater than the height H2 of the end of the inner gasket 54b, based on the inner surface 52b of the bottom portion 52 of the battery housing 51. Also, based on the inner surface 52b of the bottom portion 52 of the battery housing 51, the height H1 of the flat portion 50d may be equal to or greater than the height H3 of the end of the inner flange portion 50c. Here, the height H2 is the maximum height of the end of the inner gasket 54b measured based on the inner surface 52b. Also, the height H3 is the maximum height of the upper surface of the inner flange portion 50c measured based on the inner surface 52b.

If the height parameters H1, H2, and H3 meet the above conditions, the inner flange portion 50c and the inner gasket 54b may be prevented from interfering with other components.

Preferably, the height H3 of the inner flange portion 50c may be 0.5 mm to 3.0 mm. If the height H3 of the inner flange portion 50c is less than 0.5 mm, sufficient sealing performance cannot be secured. Also, if the height H3 of the inner flange portion 50c exceeds 3 mm, the inner space of the battery housing 51 that can be occupied by the electrode assembly is reduced.

Preferably, the height H4 of the electrode terminal 50 may be 1.5 mm to 7 mm. The height H4 of the electrode terminal 50 corresponds to the distance from the lower surface of the outer flange portion 50b to the flat portion 50d. If the height H4 of the electrode terminal 50 is less than 1.5 mm, it is difficult to increase the height of the inner flange portion 50c to a level to ensure sealing performance due to the thickness of the bottom portion 52 of the battery housing 51. For reference, the thickness of the bottom portion 52 of the battery housing 51 is approximately 0.5 mm to 1 mm. In addition, when the height H4 of the electrode terminal 50 exceeds 7mm, the inner space of the battery housing 51 that can be occupied by the electrode assembly decreases and the height of the battery increases, thereby lowering the energy density per unit volume. If H3 and H4 meet the numerical range, the sealing property of the electrode terminal 50 may be secured sufficiently without reducing the space inside the battery housing 51.

In another aspect, the height H5 of the outer flange portion 50b may be 0.8 mm or more based on the outer surface 52a of the bottom portion 52 of the battery housing 51. If the height H5 of the outer flange portion 50b is less than 0.8 mm, the outer flange portion 50b may be deformed when the electrode terminal 50 is riveted. The thickness of the outer gasket 54a is 0.3 mm or more considering insulation and sealing properties. Considering the thickness of the outer gasket 54a, if the height of the outer flange portion 50b is less than 0.8 mm, the thickness of the outer flange portion 50b becomes thin to a level where it is difficult to secure sufficient mechanical rigidity. This is especially true when the electrode terminal 50 is made of aluminum. Meanwhile, the height of the outer flange portion 50b may be set appropriately considering the space margin at the upper portion of the battery. In one example, the height of the outer flange portion 50b may be set to 2 mm or less, or 3 mm or less, or 4 mm or less, or 5 mm or less, but the present disclosure is not limited thereto.

In still another aspect, at least a part of the outer gasket 54a may be exposed to the outside of the outer flange portion 50b of the electrode terminal 50. The purpose of exposing the outer gasket 54a is to insulate the outer surface 52a, which has a polarity opposite to that of the electrode terminal 50, and the electrode terminal 50 from each other. For electrical insulation between the electrode terminal 50 and the outer surface 52a, the exposure width G of the outer gasket 54a may be 0.1 mm to 1 mm. If the exposure width G is less than 0.1 mm, the electrical insulation between the electrode terminal 50 and the outer surface 52a on the plane may be destroyed when high c-rate charging and discharging of 300A or more is performed. In addition, if the exposure width G is larger than 1 mm, the electrical insulation effect does not increase further, but rather the area of the outer surface 52a used as a negative electrode area decreases, thereby reducing the contact area of electrical connection components (e.g., bus bar).

In still another aspect, the diameter of the flat portion 50d of the electrode terminal 50 may be determined considering the welding strength between the current collector and the flat portion 50d. The tensile force of the welding portion between the flat portion 50d and the current collector may be at least 2kgf or more, or 5kgf or more, or 6kgf or more, or 7kgf or more, or 8kgf or more, or 9kgf or more, or 10kgf or more. It is desirable to increase the tensile force of the welding portion as much as possible within the allowable range by selecting the best welding method.

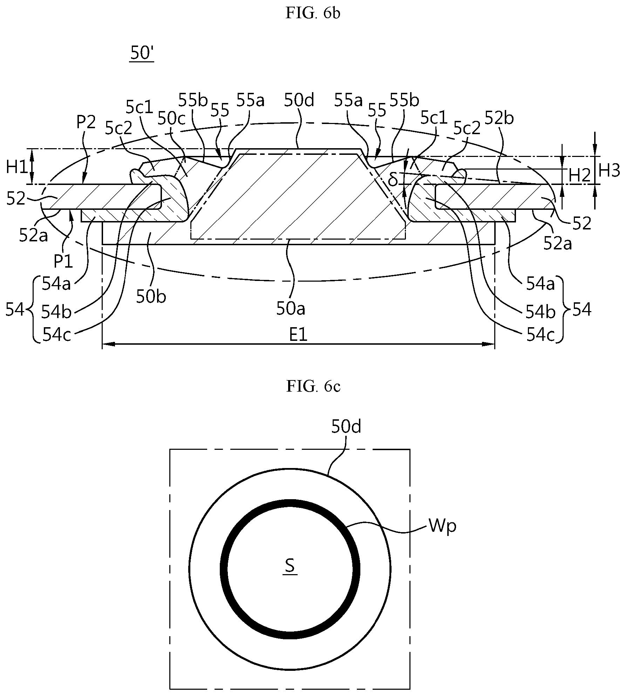

Referring to FIG. 6c, in order to satisfy the tensile force condition of the welding portion, the diameter of the welding pattern Wp formed on the flat portion 50d may be at least 2 mm. The diameter of the welding pattern Wp may be defined as the converted diameter of the circle (2*(S/π)^{0.5}) when the area S of the welding pattern Wp that appears on the surface of the welding area is converted to the area (πr²) of the circle. The welding pattern Wp may be continuous or discontinuous. The welding pattern Wp may not be a circle. When the welding pattern Wp is not a circle, the converted diameter (maximum value*2) may be determined from the maximum value of the distance from the center of the flat portion 50d to the edge of the welding pattern Wp.

The flat portion 50d of the electrode terminal 50 includes a weldable area. The diameter of the weldable area may be 3 mm to 14 mm. If the diameter of the weldable area is smaller than 3 mm, it is difficult to secure a welding pattern with a diameter of 2 mm or more. In particular, when forming a welding pattern using laser welding, it is difficult to secure a welding pattern with a diameter of 2 mm or more due to interference of the laser beam. If the diameter of the weldable area exceeds 14 mm, the diameter of the outer flange portion 50b of the electrode terminal 50 becomes too large, and thus it is difficult to sufficiently secure the area of the outer surface 52a of the bottom portion 52 of the battery housing to be used as the negative electrode area.

Considering the above diameter condition of the welding pattern and the diameter condition of the weldable area, the ratio of the area of the welding pattern to the area of the weldable area required to secure a tensile force of the welding portion of 2 kgf or more is preferably 2.04% (π1²/π7²) to 44.4% (π1²/π1.5²).

In another aspect, the radius R1 from the center of the body portion 50a to the edge of the outer flange portion 50b may be 10% to 70% based on the radius R2 of the bottom portion 52 of the battery housing 51.

As R1 becomes smaller, the welding space becomes insufficient when welding components (bus bars) used for the electrical connection of the electrode terminal 50. Also, as R1 increases, the welding space decreases when welding electrical connection components (bus bars) to the outer surface 52a of the bottom portion 52 of the battery housing 51 excluding the electrode terminal 50.

By adjusting the ratio R1/R2 between 10% and 70%, the welding space for the electrode terminal 50 and the outer surface 52a of the bottom portion 52 of the battery housing 51 may be appropriately secured.

In addition, the radius R3 from the center of the body portion 50a of the electrode terminal 50 to the edge of the flat portion 50d may be 4% to 30% based on the radius R2 of the bottom portion 52 of the battery housing 51.

If R3 becomes smaller, the welding space becomes insufficient when welding the current collector to the flat portion 50d of the electrode terminal 50, and the welding area of the electrode terminal 50 decreases, which may increase contact resistance. In addition, R3 must be smaller than R1, and if R3 becomes larger, the thickness of the inner flange portion 50c becomes thinner and the force with which the inner flange portion 50c compresses the terminal gasket 54 becomes weaker, which may deteriorate the sealing ability of the terminal gasket 54.

If R3/R2 is adjusted between 4% and 30%, the welding process may be performed easily by securing a sufficient welding area between the flat portion 50d of the electrode terminal 50 and the current collector, and it is also possible to reduce the contact resistance of the welding area and prevent deterioration of the sealing ability of the terminal gasket 54.

According to an embodiment of the present disclosure, the fixing structure of the electrode terminal 50 may be formed using a caulking jig that moves up and down. First, a preform (not shown) of the electrode terminal 50 is inserted by interposing the terminal gasket 54 into the perforation hole 53 formed in the bottom portion 52 of the battery housing 51. The preform refers to the electrode terminal before the caulking process.

Next, the caulking jig is inserted into the inner space of the battery housing 51. The caulking jig has a groove and a protrusion corresponding to the final shape of the electrode terminal 50 on the surface facing the preform in order to form the electrode terminal 50 by press-forming the preform.

Next, the caulking jig is moved downward to press-form the upper portion of the preform so that the preform is transformed into the electrode terminal 50 riveted to the perforation hole 53 of the battery housing 51. The press-fit depth of the caulking jig may be regulated by the flat portion 50d. The flat portion 50d is formed in advance on the body portion 50a, and the caulking jig has a groove into which the flat portion 50d is inserted. Therefore, while the preform is being press-formed, if the flat portion 50d contacts the bottom of the groove, the press forming is stopped. Accordingly, even during the mass production process, the shapes of the inner flange portion 50c and the recess portion 55, which are formed through plastic deformation, may be made uniform. Also, the flat portion 50d is not deformed or substantially not deformed while the preform is pressed by the caulking jig. Therefore, the flat portion 50d may also maintain a uniform shape during the mass production process. By doing so, the welding process between the flat portion 50d and the current collector, explained later, may be performed more easily, and thus manufacturing variation may be significantly reduced.

While the preform is pressed by the caulking jig and its shape is deformed, the outer gasket 54a interposed between the outer flange portion 50b and the outer surface 52a of the bottom portion 52 of the battery housing 51 is elastically compressed and its thickness decreases. In addition, the region of the intermediate gasket 54c interposed between the inner edge 56 of the perforation hole 53 and the preform is elastically compressed by the inner flange portion 50c, and its thickness is reduced more than other regions. In particular, the area where the thickness of the intermediate gasket 54c is intensively reduced is the portion indicated by the dotted circle in FIG. 6a. Accordingly, the sealing property and airtightness between the riveted electrode terminal 50 and the battery housing 51 are significantly improved.

Preferably, the terminal gasket 54 is sufficiently compressed to secure the desired sealing strength without being physically damaged while the preform is being riveted through a firing process that is called caulking.

Preferably, the compression ratio of the terminal gasket 54 may be 30% to 90%. The minimum compression ratio corresponds to the compression ratio if a minimum level to ensure the sealing property of the electrode terminal 50. The maximum compression ratio corresponds to the compression ratio of a maximum level that can be achieved without physically damaging the terminal gasket 54.

In one example, when the terminal gasket 54 is made of polybutylene terephthalade, it is desirable that the terminal gasket 54 has a compression ratio of 50% or more at the point where it is compressed to the minimum thickness.

In the present disclosure, the compression ratio may be defined as the ratio of the change in thickness at the maximum compression point compared to the thickness of the terminal gasket 54 before compression. The thicknesses of the inner gasket 54b and the intermediate gasket 54c before compression may be uniform, and a maximum compression point may exist near the inner edge 56. Preferably, the compression ratio may be calculated based on the uniform thickness of the inner gasket 54b and the intermediate gasket 54c.

In another example, when the terminal gasket 54 is made of polyfluoroethylene, it is desirable that the terminal gasket 54 has a compression ratio of 60% or more at the point where it is compressed to the minimum thickness. Preferably, the compression ratio may be calculated based on the uniform thickness of the inner gasket 54b and the intermediate gasket 54c.

In still another example, when the terminal gasket 54 is made of polypropylene, it is desirable that the terminal gasket 54 has a compression ratio of 60% or more at the point where it is compressed to the minimum thickness. Preferably, the compression ratio may be calculated based on the uniform thickness of the inner gasket 54b and the intermediate gasket 54c.

Preferably, the upper portion of the preform may be press-formed step by step by moving the caulking jig up and down at least twice. In other words, the preform may be deformed several times by performing press forming step by step. At this time, the pressure applied to the caulking jig may be increased step by step. In this way, it is possible to prevent the terminal gasket 54 from being damaged during the caulking process by dispersing the stress applied to the preform several times. In particular, damage to the gasket is minimized when the region of the intermediate gasket 54c interposed between the inner edge 56 of the perforation hole 53 and the preform is intensively compressed by the inner flange portion 50c.

After the preform is completely press-formed using the caulking jig, if the caulking jig is separated from the battery housing 51, the fixing structure of the electrode terminal 50 according to an embodiment of the present disclosure may be obtained, as shown in FIG. 6a.

According to the above embodiment, the caulking jig press-forms the upper portion of the preform by moving up and down inside the battery housing 51. In some cases, a rotary jig used in the prior art may be used for press-forming the preform.

However, the rotary jig rotates in a state of being tilted at a predetermined angle based on the central axis of the battery housing 51. Therefore, a rotary jig with a large rotation radius may cause interference with the inner wall of the battery housing 51. Also, if the depth of the battery housing 51 is large, the length of the rotary jig becomes correspondingly longer. In this case, as the rotation radius of the end of the rotary jig increases, the preform may not be press-formed properly. Therefore, press forming using the caulking jig is more effective than using a rotary jig.

Meanwhile, the electrode terminal 50 may have various structures depending on the design of the preform and/or the caulking jig and/or the terminal gasket 54 and the magnitude of the pressure applied to the preform during the caulking process.

FIG. 6b is a partially enlarged cross-sectional view schematically showing a structure of an electrode terminal 50' according to another embodiment of the present disclosure.

Referring to FIG. 6b, the electrode terminal 50' according to another embodiment has a structure in which the inner flange portion 50c is riveted toward the inner surface 52b of the bottom portion 52 of the battery housing 51.

The inner flange portion 50c includes a first region 50c1 extending gradually away from the bottom portion 52 of the battery housing 51, and a second region 50c2 connected to the first region 50c1 and extending toward the bottom portion 52 of the battery housing 51.

The angle (δ) between the surface of the second region 50c2 facing the bottom portion 52 of the battery housing 51 and the inner surface 52b of the bottom portion 52 may be 0 degrees to 30 degrees.

Preferably, the angle (δ) may be substantially close to zero to maximize the sealing property of the terminal gasket 54. Since the second region 50c2 strongly compresses the inner gasket 54b, the sealing property of the terminal gasket 54 may be increased. This effect increases as the angle (δ) is close to 0.

The height H3 of the inner flange portion 53c is greater than the height H2 of the inner gasket 54b. Also, the inner edge of the perforation hole 53 has an arc shape with a predetermined curvature. In addition, the sidewall 55a at the edge of the flat portion 50d has a structure inclined toward the flat portion 50d.

The terminal gasket 54 may include an outer gasket 54a interposed between the outer flange portion 50b and the first plane P1 where the outer surface 52a of the bottom portion 52 of the battery housing 51 is located; an inner gasket 54b interposed between the inner flange portion 50c and the second plane P2 where the inner surface 52b of the bottom portion 52 of the battery housing 51 is located; and an intermediate gasket 54c interposed between the body portion 50a and the perforation hole 53 and configured to connect the outer gasket 54a and the inner gasket 54b.

Preferably, the thickness of the intermediate gasket 54c gradually decreases in a direction away from the outer gasket 54a. Also, the inner gasket 54b may decrease to the minimum thickness near the end of the inner flange portion 50c, and then the thickness may slightly increase toward the uppermost end. This compression structure of the inner gasket 54b may further improve the sealing property of the electrode terminal 50'. The compression ratio of the inner gasket 54b may be calculated at the minimum thickness point near the end of the inner flange portion 50c.

Meanwhile, according to the experiment performed by the inventors, when the thermal shock cycle experiment was repeated for a cylindrical battery to which the electrode terminal 50, 50' was applied, it was found that a gap was generated between the terminal gasket 54 and the electrode terminal 50, 50' so that the electrolyte was leaked to the outside.

The thermal shock cycle test is an experiment that repeats the process of adjusting the state of charge of the cylindrical battery to 50% and then exposing the cylindrical battery to temperatures between -30°C and 60°C.

In each thermal shock cycle, the lowest temperature holding time was 60 minutes and the maximum temperature holding time was also 60 minutes. In addition, the speed of changing the temperature from the lowest temperature to the highest temperature or the speed of changing the temperature from the highest temperature to the lowest temperature was set to 2.5°C or less per minute. The thermal shock cycle for the cylindrical battery was repeated a total of 200 times.

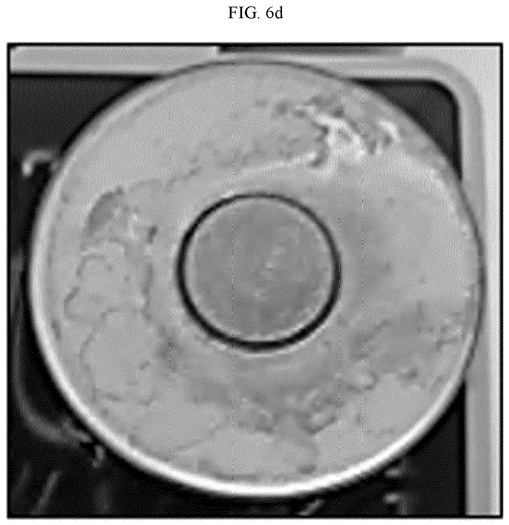

FIG. 6d is a photograph showing the surface of a cylindrical battery with the electrode terminal 50, 50' exposed after performing a thermal shock cycle test. Stains were observed on the surface of the cylindrical battery. The stain supports electrolyte leakage. As a result of analyzing components of the stain, electrolyte components were found.

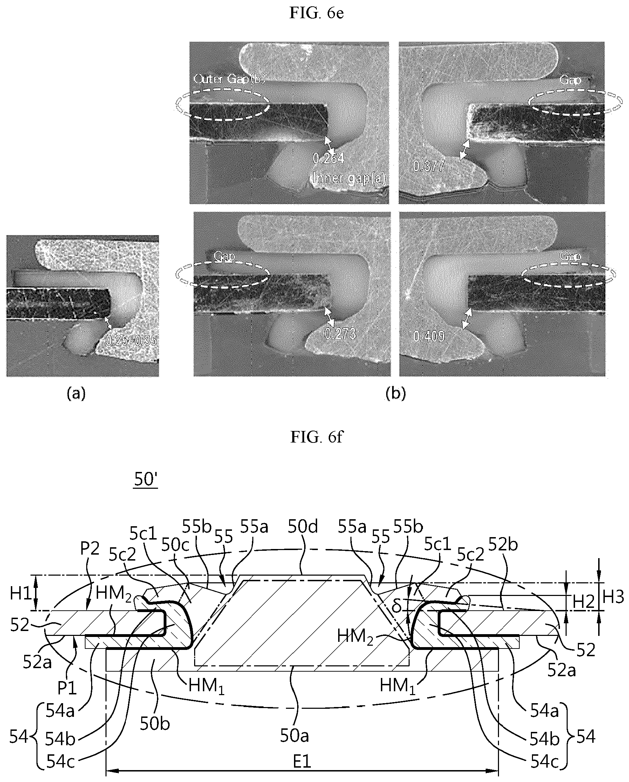

FIG. 6e is a photograph showing the results of measuring the interval between the terminal gasket 54 and the electrode terminal 50, 50' before and after the thermal shock cycle test.

FIG. 6e (a) is a cross-sectional photograph showing the electrode terminal 50, 50' and the terminal gasket 54 before the thermal shock cycle test is performed. The interval between the corner of the perforation hole where the electrode terminal 50, 50' is installed and the electrode terminal 50, 50' is measured to be 0.25 mm to 0.35 mm.

FIG. 6e (b) is a cross-sectional photograph showing the electrode terminal 50, 50' and the terminal gasket 54 taken at a total of 4 points after the thermal shock cycle test is performed. The interval between the corner of the perforation hole where the electrode terminal 50, 50' is installed and the electrode terminal 50, 50' increases from 0.264 mm to 0.409 mm, and a gap is also found at the interface between the battery housing and the terminal gasket 54.

The increase of the interval and the presence of the gap were analyzed as causes of electrolyte leakage. After the thermal shock cycle experiment was performed, the weight of the cylindrical battery was reduced. The leakage amount of the electrolyte was estimated from the weight reduction of the cylindrical battery to be approximately 180 mg to 270 mg.

FIG. 6f is a cross-sectional view showing the improved structure of the electrode terminal 50, 50' to solve the electrolyte leakage problem identified in the thermal shock cycle experiment.

The improved structure of the electrode terminal may also be applied to the embodiment shown in FIG. 6a.

A first hot-melt layer (HM₁) may be interposed between the electrode terminal 50, 50' and the terminal gasket 54.

A second hot-melt layer (HM₂) may be interposed between the battery housing and the terminal gasket 54.

Any one of the first hot-melt layer (HM1) and the second hot-melt layer (HM2) may not be formed.

The hot-melt layer may have a thickness of several µm to several hundred µm.

The first hot-melt layer (HM₁) is interposed at the interface between the inner flange portion 50c and the inner gasket 54b and may be at least partially exposed.

The first hot-melt layer (HM₁) is interposed between the outer flange portion 50b and the outer gasket 54a and may be at least partially exposed.

The second hot-melt layer (HM₂) is interposed at the interface between the outer gasket 54a and the first plane P1 and may be at least partially exposed.

The second hot-melt layer (HM₂) is interposed at the interface between the inner gasket 54b and the second plane P2 and may be at least partially exposed.

The first and second hot-melt layers (HM₁, HM₂) may be formed using a hot-melt film or a hot-melt coating solution. The hot-melt film may be locally attached to the surface of at least one of two members between which the first hot-melt layer (HM₁) and/or the second hot-melt layer (HM₂) is interposed. The hot-melt coating solution may be sprayed locally on the surface of at least one of the two members between which the first hot-melt layer (HM₁) and/or the second hot-melt layer (HM₂) is interposed. The sprayed hot-melt coating solution forms a hot-melt coating layer on the surface.

In one example, the hot-melt film may be locally attached to the surface of the terminal gasket 54 facing the electrode terminal 50 and/or the surface of the terminal gasket 54 facing the battery housing 51.

In another example, the hot-melt coating solution may be sprayed locally on the surface of the terminal gasket 54 facing the electrode terminal 50, 50' and/or the surface of the terminal gasket 54 facing the battery housing 51.

In still another example, the hot-melt film may be attached to the surface of the electrode terminal 50, 50' facing the terminal gasket 54. Alternatively, the hot-melt coating solution may be sprayed on the surface of the electrode terminal 50, 50' facing the terminal gasket 54.

In still another example, the hot-melt film may be attached to the surface of the battery housing 51 facing the terminal gasket 54. Alternatively, the hot-melt coating solution may be sprayed on the surface of the battery housing 51 facing the terminal gasket 54.

The first and second hot-melt layers (HM₁, HM₂) may be formed by heating a hot-melt film or a hot-melt coating layer. The hot-melt film or the hot-melt coating layer may be hardened through heating.

The first and second hot-melt layers (HM₁, HM₂) may be made of hot-melt materials known in the art. The hot-melt materials may be used without limitation as long as they are, for example, silicone-based, epoxy-based, acrylic-based, or urethane-based materials.

The first and second hot-melt layers (HM₁, HM₂) may improve the sealing property of the terminal gasket 54 by filling fine irregularities in the interface between the terminal gasket 54 and the electrode terminal 50, 50' and the interface between the terminal gasket 54 and the battery housing, and in particular, may prevent the lifting (interface peeling) of the terminal gasket 54.

As a result, electrolyte leakage may be prevented even if the cylindrical battery is repeatedly charged and discharged in a low or high temperature environment.

Preferably, the fixing structure of the electrode terminal 50, 50' according to an embodiment of the present disclosures as described above may be applied to a cylindrical battery with a form factor greater than 2170.

Recently, as cylindrical batteries are applied to electric vehicles, the form factor of cylindrical batteries is increasing compared to the conventional 1865, 2170, or the like. If the form factor increases, the energy density is increased, the safety against thermal runaway is enhanced, and the cooling efficiency is improved.

In addition, as explained later, electrical wiring may be performed at one side of the cylindrical battery to which the fixing structure of the electrode terminal 50, 50' is applied. Also, the electrode terminal 50, 50' has low resistance due to a large sectional area and thus is very suitable for rapid charging.

Preferably, the cylindrical battery to which the structure of the electrode terminal 50, 50' of the present disclosure may be, for example, a cylindrical battery whose form factor ratio (defined as a value obtained by dividing the diameter of the cylindrical battery by height, namely a ratio of diameter (Φ) to height (H)) is greater than about 0.4.

Here, the form factor means a value indicating the diameter and height of a cylindrical battery. The form factor of the cylindrical battery according to an embodiment of the present disclosure may be, for example, 4611, 4875, 48110, 4880, or 4680. In the numerical value representing the form factor, first two numbers indicate the diameter, and the remaining numbers indicate the height

A battery according to an embodiment of the present disclosure may be a cylindrical battery, whose diameter is about 46 mm, height is about 110 mm, and form factor ratio is 0.418.

A battery according to another embodiment may be a cylindrical battery, whose diameter is about 48 mm, height is about 75 mm, and form factor ratio is 0.640.

A battery according to still another embodiment may be a cylindrical battery, whose diameter is about 48 mm, height is about 110 mm, and form factor ratio is 0.436.

A battery according to still another embodiment may be a cylindrical battery, whose diameter is about 48 mm, height is about 80 mm, and form factor ratio is 0.600.

A battery according to still another embodiment may be a cylindrical battery, whose diameter is about 46 mm, height is about 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

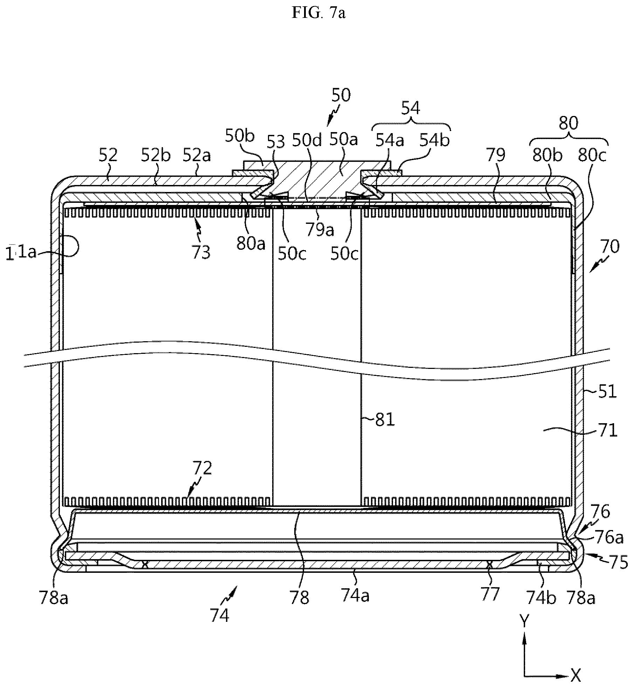

FIG. 7a is a sectional view showing a cylindrical battery 70 according to an embodiment of the present disclosure, taken along the longitudinal direction Y.

Referring to FIG. 7a, the cylindrical battery 70 according to an embodiment includes a jelly-roll type electrode assembly 71, in which a first electrode and a second electrode in a sheet form are wound in a state where a separator is interposed therebetween, the uncoated portion 72 of the first electrode serving as a first portion of the first electrode is exposed at the lower portion, and the uncoated portion 73 of the second electrode serving as a second portion of the second electrode is exposed at the lower portion.

Here, the first portion and the second portion may be different portions of the electrode other than the uncoated portion. The other portion may be a metal tab electrically coupled to the uncoated portion of the electrode. Also, it is not excluded that the electrode assembly 71 has a shape other than a jelly-roll shape. In addition, it is obvious that the battery may have not only a cylindrical shape but also other shapes such as a prismatic shape.

In an embodiment, the first electrode may be a negative electrode and the second electrode may be a positive electrode, or vice versa.

The method of winding the electrode assembly 71 is substantially the same as the method of winding an electrode assembly used in manufacturing a tab-less cylindrical battery according to the prior art described with reference to FIG. 2.

When showing the electrode assembly 71, only the uncoated portions 72, 73 that are exposed and extended outside the separator are shown in detail, and the winding structure of the first electrode, the second electrode and the separator is not depicted.

The cylindrical battery 70 also includes a cylindrical battery housing 51 configured to accommodate the electrode assembly 71 and electrically connected to the uncoated portion 72 of the first electrode.

Preferably, one side (lower portion) of the battery housing 51 is open. Also, the bottom portion 52 of the battery housing 51 has a structure in which the electrode terminal 50 is riveted to the perforation hole 53 through a firing (e.g., caulking) process.

Specifically, the electrode terminal 50 includes a body portion 50a inserted into the perforation hole 53, an outer flange extending along the outer surface 52a from the periphery of the first side of the body portion 50a exposed through the outer surface 52a of the bottom portion 52 of the battery housing 51, an inner flange portion 50c extending from the periphery of the second side of the body portion 50a exposed through the inner surface 52b of the bottom portion 52 of the battery housing 51 toward the inner surface 52b, and, optionally, a flat portion 50d provided at the inner side of the inner flange portion 50c and surrounded by the inner flange portion 50c.

The electrode terminal 50 may be replaced with the electrode terminal 50' structure shown in FIG. 6b.

The cylindrical battery 70 may also include a terminal gasket 54 interposed between the electrode terminal 50 and the perforation hole 53.

The cylindrical battery 70 may also include a sealing body 74 that seals the open end of the battery housing 51 to enable insulation from the battery housing 51. Preferably, the sealing body 74 may include a cap 74a having no polarity and having a plate shape, and a sealing gasket 74b interposed between the edge of the cap 74a and the open end of the battery housing 51.

The cap 74a may be made of a conductive metal material such as aluminum, steel, or nickel. Also, the sealing gasket 74b may be made of polypropylene, polybutylene terephthalate, polyfluoroethylene, or the like, which have insulating and elastic properties. However, the present disclosure is not limited by the materials of the cap 74a and the sealing gasket 74b.

The cap 74a may include a vent notch 77 that ruptures when the pressure inside the battery housing 51 exceeds a threshold value. The vent notch 77 may be formed on both sides of the cap 74a. The vent notch 77 may have a continuous or discontinuous circular, straight, or other pattern on the surface of the cap 74a. The depth and width of the vent notch 77 may be set so that the vent notch 77 may rupture when the pressure inside battery housing 51 is in the range of 15 kgf/cm² to 35 kgf/cm².

In order to fix the sealing body 74, the battery housing 51 may include a crimping portion 75 that extends and bends into the battery housing 51 to surround and fix the edge of the cap 74a along with the sealing gasket 74b.

Preferably, the lower surface of the cap 74a may be located above the bottom of the crimping portion 75. Then, a vent space is formed below the cap 74a, so that gas may be discharged smoothly when the vent notch 77 is ruptured.

The battery housing 51 may also include a beading portion 76 press-fitted into the inner side of the battery housing 51 in an area adjacent the open end. The beading portion 76 supports the edge of the sealing body 74, especially the outer circumferential surface of the sealing gasket 74b, when the sealing body 74 is fixed by the crimping portion 75.

The cylindrical battery 70 may further include a first current collector 78 that is welded to the uncoated portion 72 of the first electrode. The first current collector 78 is made of conductive metal materials such as aluminum, steel, and nickel. Preferably, the first current collector 78 may be fixed by the crimping portion 75 in a state that at least a portion 78a of the edge thereof that is not in contact with the uncoated portion 72 of the first electrode is interposed between the beading portion 76 and the sealing gasket 74b. Optionally, the at least a portion 78a of the edge of the first current collector 78 may be fixed to the inner circumference 76a of the beading portion 76 adjacent to the crimping portion 75 through welding.

The cylindrical battery 70 may also include a second current collector 79 that is welded to the uncoated portion 73 of the second electrode. Preferably, at least a portion of the second current collector 79, such as the center portion 79a, may be welded to the flat portion 50d of the electrode terminal 50.

Preferably, when the second current collector 79 is welded, the welding tool may be inserted through the cavity 81 present in the core of the electrode assembly 71 to reach the welding point of the second current collector 79. In addition, when the second current collector 79 is welded to the flat portion 50d of the electrode terminal 50, the electrode terminal 50 supports the welding area of the second current collector 79, so the welding quality may be improved by applying a strong pressure to the welding area. In addition, the flat portion 50d of the electrode terminal 50 has a wide area, so a large welding area may be secured. As a result, the internal resistance of the cylindrical battery 70 may be lowered by lowering the contact resistance of the welding area. The face-to-face welding structure of the riveted electrode terminal 50 and the second current collector 79 is very useful for fast charging using high c-rate current. This is because the current density per unit area can be lowered in the cross section in the direction in which the current flows, so the amount of heat generated in the current path can be lowered than before.

When welding the flat portion 50d of the electrode terminal 50 and the second current collector 79, any one of laser welding, ultrasonic welding, spot welding, and resistance welding can be used.

In one example, when the flat portion 50d and the second current collector 79 are welded with a laser and welded with continuous or discontinuous lines in the form of an arc pattern, the diameter of the arc welding pattern is preferably 2 mm or more, preferably 4 mm or more. If the diameter of the arc welding pattern satisfies the corresponding condition, it is possible to secure sufficient welding strength by increasing the tensile force of the welding portion to 2 kgf or more.

In another example, when the flat portion 50d and the second current collector 79 are ultrasonically welded in a circular pattern, the diameter of the circular welding pattern is preferably 2 mm or more. If the diameter of the circular welding pattern satisfies the corresponding condition, it is possible to secure sufficient welding strength by increasing the tensile force of the welding portion to 2 kgf or more.

The diameter of the flat portion 50d corresponding to the weldable area may be adjusted in the range of 3 mm to 14 mm. If the radius of the flat portion 50d is smaller than 3 mm, it is difficult to form a welding pattern with a diameter of 2 mm or more using a laser welding tool, an ultrasonic welding tool, or the like. In addition, if the radius of the flat portion 50d exceeds 14 mm, the size of the electrode terminal 50 becomes too large, and the area occupied by the outer surface 52a of the bottom portion 52 of the battery housing 51 is reduced, which makes it difficult to connect the electrical connection components (bus bars) through the outer surface 52a.

Preferably, the diameter of the welding pattern to secure the tensile force of the welding portion of 2 kgf or more is 2 mm or more and the diameter of the weldable area is 3 mm to 14 mm, so the ratio of the area of the welding pattern to the area of the weldable area is 2.04 (100*π1²/π7²)% to 44.4 (100*π1²/π1.5²)%.

The cylindrical battery 70 may also further include an insulator 80. The insulator 80 may be interposed between the second current collector 79 and the inner surface 52b of the bottom portion 52 of the battery housing 51 and between the inner circumference 51a of the sidewall of the battery housing 51 and the electrode assembly 71.

Preferably, the insulator 80 may include a welding hole 80a that exposes the flat portion 50d of the electrode terminal 50 toward the second current collector 79. Also, the welding hole 80a may expose the inner flange portion 50c and the inner gasket 54b together with the flat portion 50d of the electrode terminal.

Preferably, the insulator 80 may cover at least the surface of the second current collector 79 and one side (top) edge of the electrode assembly 71. Through this, it is possible to prevent the second current collector 79, which has a different polarity from the battery housing 51, and the uncoated portion 73 of the second electrode from contacting each other.

Preferably, the insulator 80 is made of an insulating resin and may include a top plate 80b and a side sleeve 80c. In one example, the top plate 80b and the side sleeve 80c may be an integrated injection-molded product. Alternatively, the side sleeve 80c may be replaced with an insulating tape or the like. The insulating tape may cover the outer edge of the second current collector 79 together with the uncoated portion 73 of the second electrode exposed through the outer circumferential surface of the electrode assembly 71.

Preferably, the insulator 80 and the inner surface 52b of the bottom portion 52 of the battery housing 51 may be in close contact with each other as shown in FIG. 7c. Here, the term 'close contact' means that there is no space (gap) visible to the naked eye. To eliminate the space (gap), the distance from the inner surface 52b of the bottom portion 52 of the battery housing 51 to the flat portion 50d of the electrode terminal 50 may be equal to or slightly smaller than the thickness of the insulator 80.

Preferably, the uncoated portion 72, 73 of the first electrode and/or the second electrode may be bent in a radius direction of the electrode assembly 71, for example from the outer circumference toward the core, to form a bent surface at the upper and lower portions of the electrode assembly 71. Also, the first current collector 78 may be welded to the bent surface formed by bending the uncoated portion 72 of the first electrode, and the second current collector 79 may be welded to the bent surface formed by bending the uncoated portion 73 of the second electrode.

In order to relieve stress generated when the uncoated portion 72, 73 is bent, the first electrode and/or the second electrode may have an improved structure different from the conventional electrode (see FIG. 1).

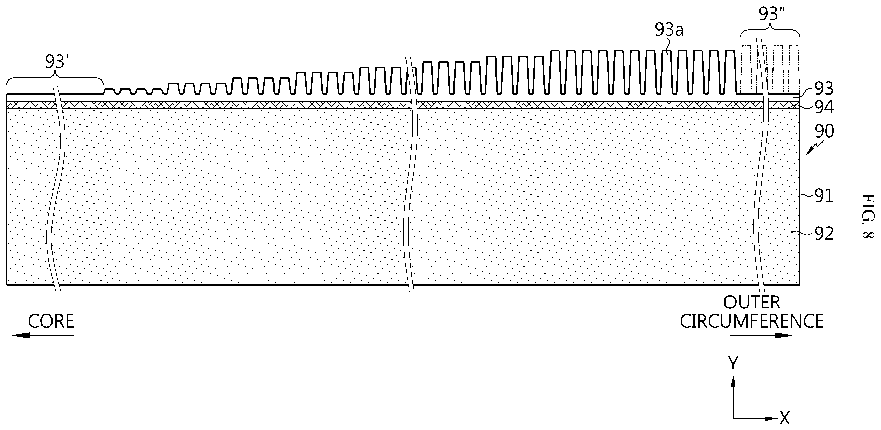

FIG. 8 is a plan view exemplarily showing the structure of an electrode 90 according to a preferred embodiment of the present disclosure.

Referring to FIG. 8, the electrode 90 includes a sheet-shaped current collector 91 made of a conductive material foil, an active material layer 92 formed on at least one side of the current collector 91, and an uncoated portion 93 not coated with an active material and provided at the long side end of the current collector 91.

Preferably, the uncoated portion 93 may include a plurality of notched segments 93a. The plurality of segment 93a forms a plurality of groups, and the segments 93a belonging to each group may have the same height (Y-direction length) and/or width (X-direction length) and/or spacing pitch. The number of segments 93a belonging to each group may be increased or decreased from those shown in the drawings. The segment 93a has a geometric shape in which at least one straight line and/or at least one curve are combined. Preferably, the segment 93a may have a trapezoidal shape, but may be modified into a rectangular, quadrilateral, semicircular, or semielliptical shape.

Preferably, the height of the segment 93a may increase stepwise along a direction parallel to the winding direction of the electrode assembly, for example from the core toward the outer circumference. Also, the core side uncoated portion 93' adjacent to the core may not include the segment 93a, and the height of the core side uncoated portion 93' may be smaller than that of other uncoated portion areas. In addition, the outer circumference side uncoated portion 93" adjacent to the outer circumference may not include the segment 93a, and the height of the outer circumference side uncoated portion 93" may be smaller than that of other uncoated portion areas.

Optionally, the electrode 90 may include an insulating coating layer 94 that covers the boundary between the active material layer 92 and the uncoated portion 93. The insulating coating layer 94 includes an insulating polymer resin and may optionally further include an inorganic filler. The insulating coating layer 94 prevents the end of the active material layer 92 from contacting the active material layer having opposite polarity and facing through the separator and serves to structurally support the bending of the segment 93a. To this end, when the electrode 90 is wound into an electrode assembly, it is preferable that at least a part of the insulating coating layer 94 is exposed to the outside from the separator.

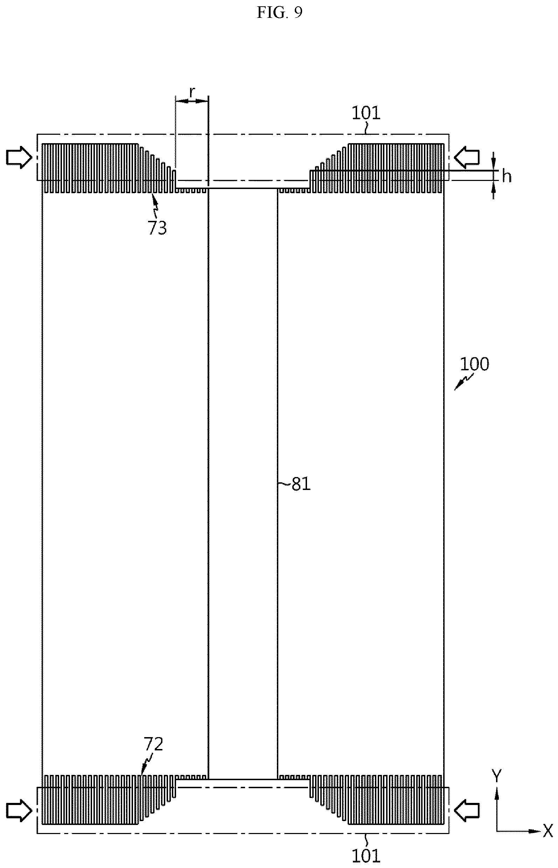

FIG. 9 is a cross-sectional view showing an electrode assembly 100 in which a segmental structure of an uncoated portion of an electrode 90 according to an embodiment of the present disclosure is applied to a first electrode and a second electrode, taken along a longitudinal direction Y.

Referring to FIG. 9, the electrode assembly 100 may be manufactured using the winding method described with reference to FIG. 2. For convenience of explanation, the protruding structure of the uncoated portions 72, 73 extending to the outside of the separator are shown in detail, and the winding structure of the first electrode, the second electrode and the separator is not depicted. The uncoated portion 72 protruding downward extends from the first electrode, and the uncoated portion 73 protruding upward extends from the second electrode.

The changing pattern of the height of the uncoated portions 72, 73 is schematically shown. In other words, the height of the uncoated portions 72, 73 may vary irregularly depending on the location where the cross section is cut. For example, when the side portion of trapezoid segment 93a is cut, the height of the uncoated portion in the cross section becomes lower than the height of the segment 93a. Therefore, it should be understood that the height of the uncoated portions 72, 73 shown in the cross-sectional view of the electrode assembly 100 correspond to the average of the heights of the uncoated portions included in each winding turn.

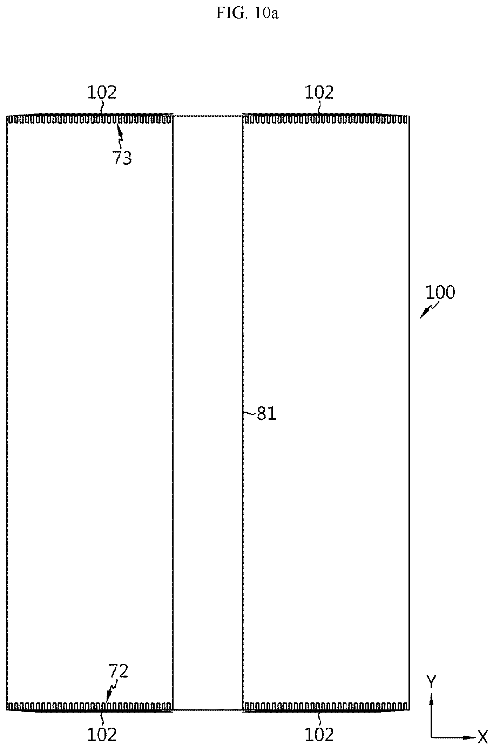

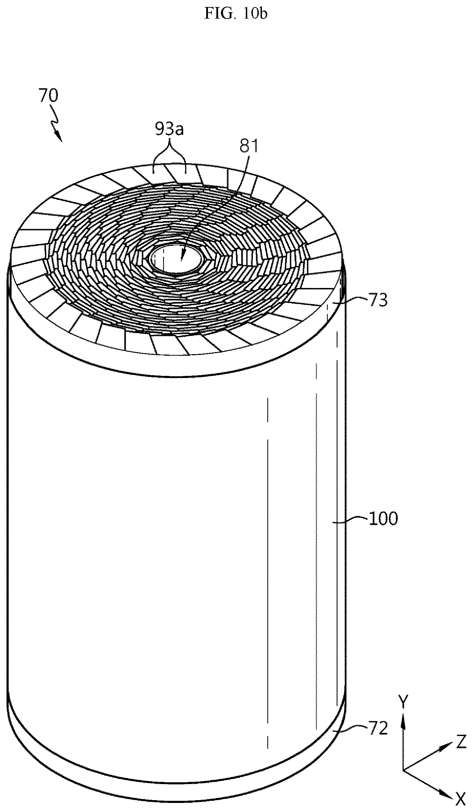

The uncoated portions 72, 73 may be bent along the radial direction of the electrode assembly 100, for example from the outer circumference toward the core, as shown in FIGS. 10a and 10b. In FIG. 9, the bent portion 101 is indicated by a dotted box. When the uncoated portions 72, 73 are bent, segments adjacent in the radial direction overlap each other in several layers, thereby forming a bent surface 102 at the upper and lower portions of the electrode assembly 100. At this time, the core side uncoated portion 93' (FIG. 8) is not bent due to its low height, and the height (h) of the innermost bent segment is equal to or smaller than the radial length (r) of the winding area formed by the core side uncoated portion 93' without a segment structure. Accordingly, the cavity 81 in the core of the electrode assembly 100 is not closed by the bent segments. If the cavity 81 is not closed, there is no difficulty in the electrolyte injection process, and the electrolyte injection efficiency is improved. In addition, the electrode terminal 50 and the second current collector 79 may be easily welded by inserting a welding tool through the cavity 81.

In the cylindrical battery 70 according to an embodiment of the present disclosure, the cap 74a of the sealing body 74 has no polarity. Instead, since the first current collector 78 is connected to the sidewall of the battery housing 51, the outer surface 52a of the bottom portion 52 of the battery housing 51 has an opposite polarity to the electrode terminal 50. Therefore, when connecting a plurality of batteries in series and/or parallel, wiring such as bus bar connection may be performed at the upper portion of the cylindrical battery 70 using the outer surface 52a of the bottom portion 52 of the battery housing 51 and the electrode terminal 50. Through this, energy density may be improved by increasing the number of batteries that can be mounted in the same space, and electrical wiring work may be easily performed.

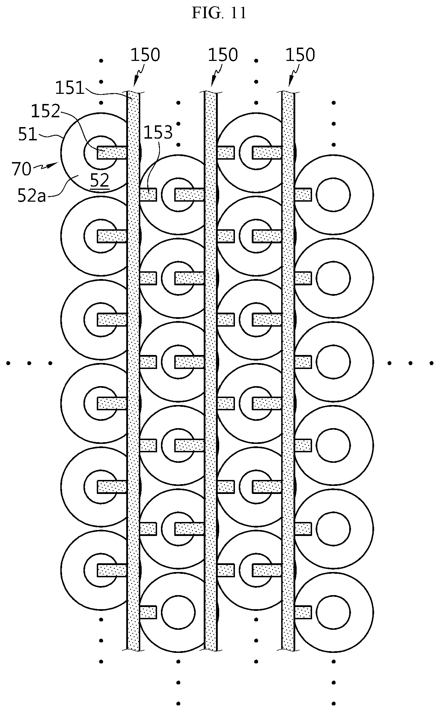

FIG. 11 is a diagram showing a plurality of cylindrical batteries 70 electrically connected using a bus bar 150 according to an embodiment of the present disclosure.

Referring to FIG. 11, a plurality of cylindrical batteries 70 may be connected in series and parallel at the upper portion using the bus bar 150. The number of cylindrical batteries 70 may be increased or decreased considering the capacity of the battery pack.

In each cylindrical battery 70, the electrode terminal 50 may have a positive polarity, and the outer surface 52a of the bottom portion 52 of the battery housing 51 may have a negative polarity, and vice versa.

Preferably, the plurality of cylindrical batteries 70 may be arranged in a plurality of columns and rows. Columns are oriented up and down based on the drawing, and rows are oriented left and right based on the drawing. Also, to maximize space efficiency, the cylindrical batteries 70 may be arranged in a closest packing structure. The closest packing structure is formed when the centers of the electrode terminals 50 form an equilateral triangle when being connected to each other.

Preferably, the bus bar 150 may be disposed at the upper portion of the plurality of batteries 70, more preferably between adjacent columns. Alternatively, the bus bar 150 may be disposed between adjacent rows.

Preferably, the bus bar 150 connects batteries disposed in the same column in parallel with each other and connects batteries disposed in two adjacent columns in series.

Preferably, the bus bar 150 may include a body portion 151, a plurality of first bus bar terminals 152, and a plurality of second bus bar terminals 153 for serial and parallel connection.

The body portion 151 may extend between electrode terminals 50 of adjacent cylindrical batteries 70, preferably between columns of the cylindrical batteries 70. Alternatively, the body portion 151 may extend along the column of the cylindrical batteries 70, but the body portion 151 may be bent regularly, such as in a zigzag shape.

The plurality of first bus bar terminals 152 protrude and extend from one side of the body portion 151 toward the electrode terminal 50 of each cylindrical battery 70 and may be electrically coupled to the electrode terminal 50. Electrical coupling with the electrode terminal 50 may be achieved through laser welding, ultrasonic welding, or the like. Also, the plurality of second bus bar terminals 153 protrude and extend from the other side of the body portion 151 toward the outer surface 52a of the bottom portion 52 of the battery housing 51 of each cylindrical battery 70, and may be electrically coupled to the outer surface 52a. Electrical coupling with the outer surface 52a may be achieved by laser welding or ultrasonic welding.

Preferably, the body portion 151, the plurality of first bus bar terminals 152, and the plurality of second bus bar terminals 153 may be made of one conductive metal plate. The metal plate may be an aluminum plate or a copper plate, but the present disclosure is not limited thereto. In a modified example, the body portion 151, the plurality of first bus bar terminals 152, and the plurality of second bus bar terminals 153 may be manufactured as separate piece units and then coupled to each other through welding or the like.

In the cylindrical battery 70 according to the present disclosure, since the electrode terminal 50 with positive polarity and the outer surface 52a of the bottom portion 52 of the battery housing 51 with negative polarity are located in the same direction, the cylindrical batteries 70 may be electrically connected easily using the bus bar 150.

In addition, since the electrode terminal 50 of the cylindrical battery 70 and the outer surface 52a have a large area, the resistance of the battery pack including the cylindrical battery 70 may be sufficiently reduced by securing a sufficient coupling area for the bus bar 150.

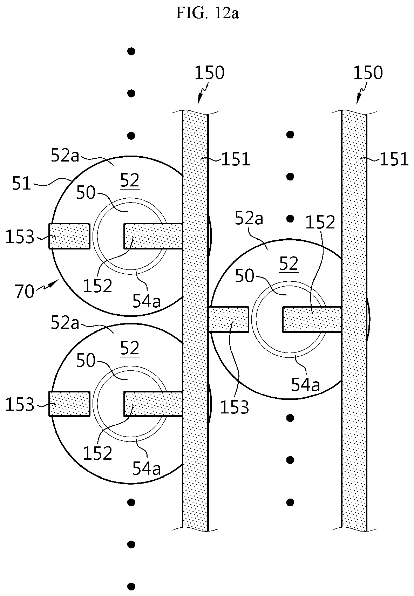

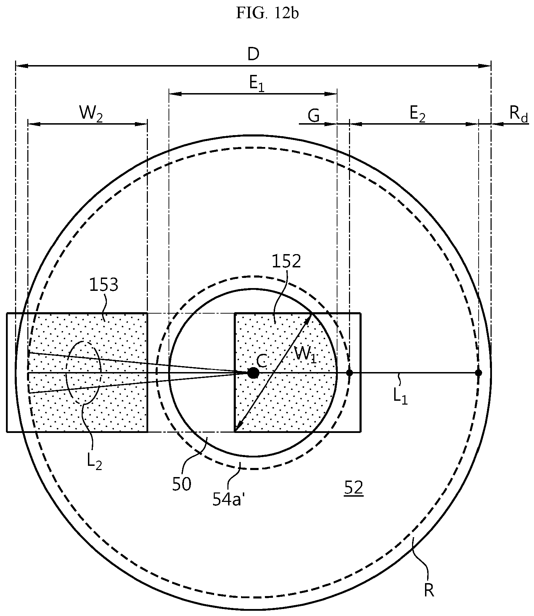

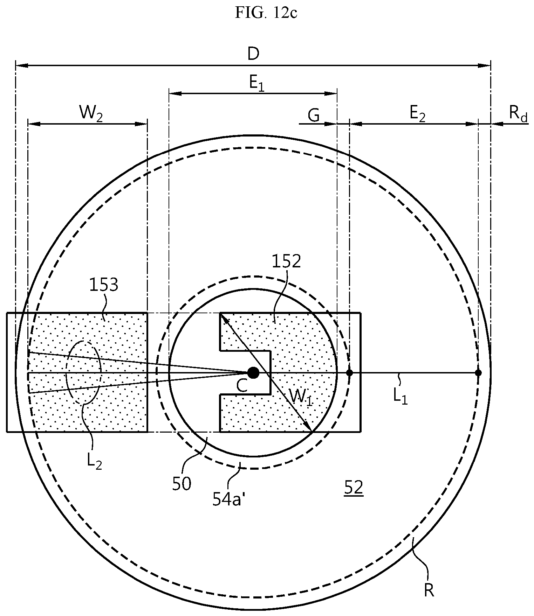

FIG. 12a is an enlarged view showing the electric connection portion of the bus bar 150 and the cylindrical battery 70, and FIGS. 12b and 12c are diagrams showing the definitions of various parameters to design upper and lower limits for the diameter of the electrode terminal 50 and the exposure width of the outer surface 52a in consideration of the sizes of the bus bar terminals 152, 153.

Referring to FIGS. 12a, 12b, and 12c, in the cylindrical battery 70, the diameter (E₁) of the electrode terminal 50 and the width (E₂) of the ring-shaped outer surface 52a may be adjusted adaptively in consideration of the dimension of the contact area of the bus bar terminals 152, 153.

Here, the width (E₂) of the outer surface 52a is the width of the exposed surface parallel to the surface of the electrode terminal 50. Specifically, the width (E₂) of the outer surface 52a is defined as the width of the line segment connecting two points at which a straight line (L₁) drawn in the radial direction from the center C of the electrode terminal 50 intersects the inner and outer boundaries of the outer surface 52a. The width (E₂) of the outer surface 52a is the width of the flat exposed surface excluding the round area at the edge of the bottom portion 52 and the exposed area 54a' of the outer gasket 54a.

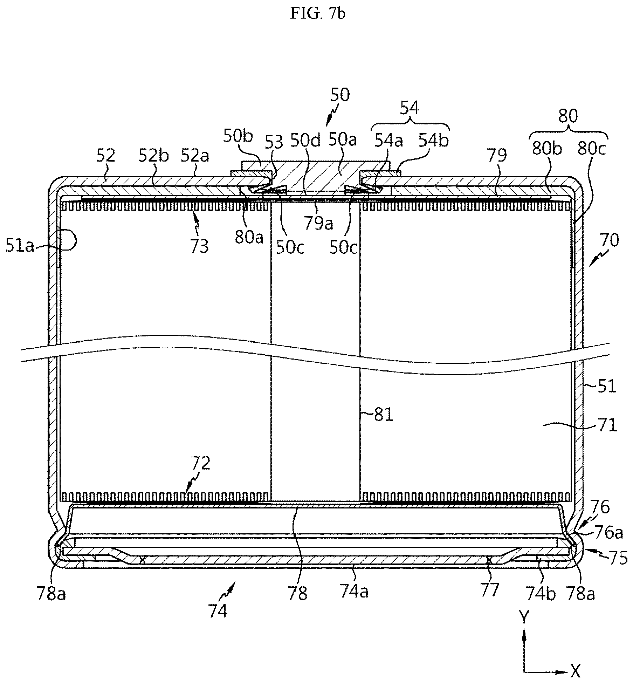

When viewed from the above, the bottom portion 52 of the battery housing 51 may be divided into the electrode terminal 50, the exposed area 54a' of the terminal gasket 54, and the round area R at the edge of the outer surface 52a. The round area R is a processed area (see FIGS. 7a and 7b) to smoothly connect the bottom portion 52 of the battery housing 51 and the sidewall of the battery housing 51, and has a width (R_{d}) on the plane.

The first bus bar terminal 152 of the bus bar 150 branches off to a side different from the traveling direction of the body portion 151 and is electrically coupled to the electrode terminal 50. At this time, the electrode terminal 50 and the first bus bar terminal 152 form a first overlapping area (indicated by hatching) on the plane, and the first overlapping area has the first width (W₁). Here, the first overlapping area is the area where the electrode terminal 50 and the first bus bar terminal 152 overlap on the plane.

The first width (W₁) is defined as the maximum distance between any two points selected in the edge of the first overlapping area. The definition of the first width (W₁) applies equally to the case where the first overlapping area includes the center of the electrode terminal 50 (FIG. 12b) and the case where the first overlapping area does not include the center of the electrode terminal 50 (FIG. 12c). Referring to FIGS. 12b and 12c, the distance indicated by W₁ corresponds to the maximum value among the distances between any two points selected in the edge of the first overlapping area.

The second bus bar terminal 153 of the bus bar 150 extends in the opposite direction to the first bus bar terminal 152 based on the traveling direction of the body portion 151 and is electrically coupled to the outer surface 52a of the bottom portion 52 of the battery housing 51. At this time, the second bus bar terminal 153 and the outer surface 52a form a second overlapping area (indicated by hatching) on the plane, and the second overlapping area has a second width (W₂). Here, the second overlapping area is the area where the outer surface 52a and the second bus bar terminal 153 overlap on the plane.

The second width (W₂) is defined as the maximum width between two points where each straight line meets the edge of the second overlapping area when a plurality of straight lines (L₃) are drawn from the center C of the electrode terminal 50 to pass through the second overlapping area.

Preferably, the diameter (E₁) of the electrode terminal 50 should be at least equal to or greater than the first width (W₁) of the first bus bar terminal 152. This is because the first overlapping area of the first bus bar terminal 152 and the electrode terminal 50 must not deviate to the outside of the electrode terminal 50 on the plane. Also, the diameter (E₁) of the electrode terminal 50 may be increased to the maximum until the distance between the boundary of the electrode terminal 50 and the second bus bar terminal 153 corresponds to the width G of the exposed area 54a' of the outer gasket 54a. Therefore, the maximum value of the diameter (E₁) of the electrode terminal 50 is 'D-2*R_{d}-2*G-2*W₂'.

Preferably, the width (E₂) of the outer surface 52a is a factor dependent on the diameter (E₁) of the electrode terminal 50 and should be at least equal to or greater than the second width (W₂) of the second bus bar terminal 153. Only in this case, the overlapping area of the second bus bar terminal 153 and the outer surface 52a can be formed. In addition, the width (E₂) of the outer surface 52a may be increased to 50% of 'D-2*R_{d}-2*G-E₁', which is the value obtained by deducting the diameter (E₁) of the electrode terminal 50, the width (2*G) of the exposed area of the outer gasket 54a, and the width (2*R_{d}) of the round area from the outer diameter (D) of the battery housing 51.

In conclusion, in the cylindrical battery 70 according to the present disclosure, it is desirable that the diameter (E₁) of the electrode terminal 50 and the width (E₂) of the outer surface 52a are designed to satisfy the following relational equation. ${W}_{1} \leq {E}_{1} \leq D - 2 {R}_{d} - 2 G - 2 {W}_{2}$ ${E}_{2} = 0.5 * \left(D-2{R}_{d}-2G-{E}_{1}\right)$ (E₁: diameter of the electrode terminal 50, E₂: width of the outer surface 52a, D: outer diameter of the battery housing 51, R_{d}: width of the round area R measured on the plane, G: width of the exposed area 54a' of the outer gasket 54a, W₁: width of the first bus bar terminal 152, W₂: width of the second bus bar terminal 153)

In a specific example, when D is 46 mm, W₁ and W₂ are 6 mm, G is 0.5 mm, and R is 1 mm, the diameter (E₁) of the electrode terminal 50 is 6 mm to 31 mm and the width (E₂) of the outer surface 52a is 6 mm to 18.5 mm.

As another example, when D is 46 mm, W₁ and W₂ are 6 mm, G is 0.5 mm, and R_{d} is 1.5 mm, the diameter (E₁) of the exposed electrode terminal portion 50 is 6 mm to 30 mm and the width (E₂) of the outer surface 20a is 6 mm to 18 mm.

The cylindrical battery 70 of the present disclosure described above has a structure in which resistance is minimized through expansion of the welding area through a bent surface, multiplexing of current paths using the first current collector, minimization of the current path length, and the like. The AC resistance of the cylindrical battery 70, measured using a resistance meter between the positive electrode and the negative electrode, namely between the electrode terminal 50 and the surrounding flat outer surface 52a, may be 0.5 milliohm to 4 milliohm, preferably 1 milliohm to 4 milliohm, suitable for fast charging.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula A[AₓM_{y}]O_{2+z} (A includes at least one element among Li, Na and K; M includes at least one element selected from Ni, Co, Mn, Ca, Mg, Al, Ti, Si, Fe, Mo, V, Zr, Zn, Cu, Mo, Sc, Zr, Ru, and Cr; x ≥ 0, 1 ≤ x+y ≤2, -0.1 ≤ z ≤ 2; and the stoichiometric coefficients x, y, z and M are selected so that the compound maintains electrical neutrality).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Mg, and Al; M² includes at least one element selected from Ti, Si, Mn, Co, Fe, Cr, Mo, Ni, Nd, Al, Mg, As, Sb, Si, Ge, V, and S; M³ includes a halogen element optionally including F; 0 < a ≤ 2, 0 ≤ x ≤ 1, 0 ≤ y < 1, 0 ≤ z < 1; the stoichiometric coefficients a, x, y, z, M¹, M², and M³ are selected so that the compound maintains electrical neutrality), or Li₃M₂(PO₄)₃ [M includes at least one element selected from Ti, Si, Mn, Fe, Co, V, Cr, Mo, Ni, Mg, and Al].

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

The inorganic particles may be made of an inorganic material having a dielectric constant of 5 or more. The inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure like A⁺B⁻. Here, A⁺ includes an alkali metal cation such as Li⁺, Na⁺, or K⁺, or a combination thereof. and B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The cylindrical battery 70 according to the above embodiment may be used to manufacture a battery pack.

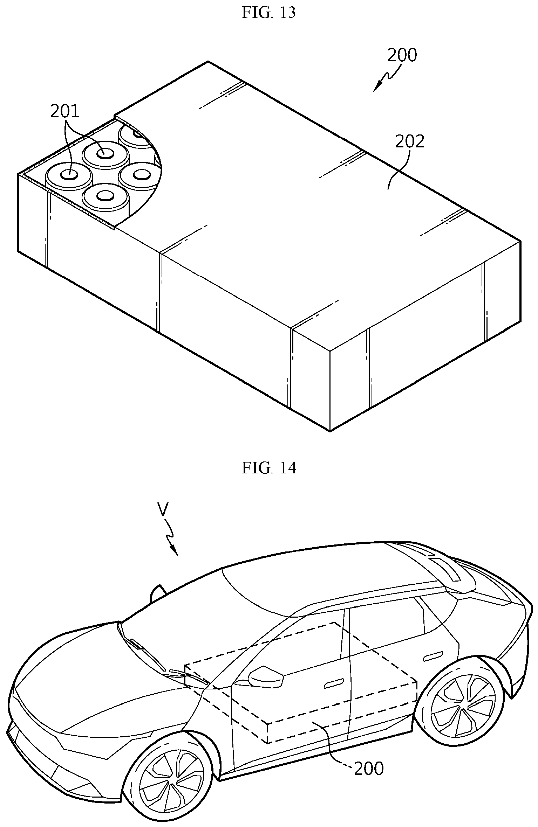

FIG. 13 is a diagram schematically showing a battery pack according to an embodiment of the present disclosure.

Referring to FIG. 13, a battery pack 200 according to an embodiment of the present disclosure includes an aggregate in which cylindrical batteries 201 are electrically connected, and a pack housing 202 for accommodating the aggregate. The cylindrical battery 201 may be the battery according to the above embodiment. In the drawing, components such as a bus bar, a cooling unit, and an external terminal for electrical connection of the cylindrical batteries 201 are not depicted for convenience of illustration.

The battery pack 200 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 14 is a diagram schematically showing a vehicle including the battery pack 200 of FIG. 13.

Referring to FIG. 14, a vehicle V according to an embodiment of the present disclosure includes the battery pack 200 according to an embodiment of the present disclosure. The vehicle V operates by receiving power from the battery pack 200 according to an embodiment of the present disclosure.

## Claims

1. A fixing structure of an electrode terminal (50, 50'), comprising:
a battery housing (41, 51) having an open end and a bottom portion (52) in which a perforation hole (53) is formed;
an electrode terminal (50, 50') installed through the perforation hole (53) so as to not contact an inner wall of the perforation hole (53);
a terminal gasket (54) interposed between the electrode terminal (50, 50') and the perforation hole (53); and
a hot-melt layer (HM1, HM2) interposed at an interface between the electrode terminal (50, 50') and the terminal gasket (54) or an interface between the terminal gasket (54) and the battery housing (41, 51).

2. The fixing structure of an electrode terminal (50, 50') according to claim 1,
wherein the electrode terminal (50, 50') includes:
a body portion (50a, 151) inserted into the perforation hole (53);
an outer flange portion (50b) configured to extend from a first side of the body portion (50a, 151) along an outer surface (20a, 52a) of the bottom portion (52) of the battery housing (41, 51); and
an inner flange portion (50c, 53c) configured to at least partially extend from a second side of the body portion (50a, 151) to face the bottom portion (52) of the battery housing (41, 51) and compress the terminal gasket (54).

3. The fixing structure of an electrode terminal (50, 50') according to claim 2,
wherein a welding portion is provided on an inner side of the inner flange portion (50c, 53c).

4. The fixing structure of an electrode terminal (50, 50') according to claim 3, wherein the welding portion has a flat surface.

5. The fixing structure of an electrode terminal (50, 50') according to claim 2,
wherein the terminal gasket (54) includes:
an outer gasket (54a) interposed between the outer flange portion (50b) and a first plane where the outer surface (20a, 52a) of the bottom portion (52) of the battery housing (41, 51) is located;
an inner gasket (54b) interposed between the inner flange portion (50c, 53c) and a second plane where an inner surface (52b) of the bottom portion (52) of the battery housing (41, 51) is located; and
an intermediate gasket (54c) interposed between the body portion (50a, 151) and the perforation hole (53) and configured to connect the outer gasket (54a) and the inner gasket (54b).

6. The fixing structure of an electrode terminal (50, 50') according to claim 5,
wherein the hot-melt layer (HM1) is located at the interface between the outer gasket (54a) and the first plane and is at least partially exposed.

7. The fixing structure of an electrode terminal (50, 50') according to claim 5,
wherein the hot-melt layer (HM2) is located at the interface between the inner gasket (54b) and the second plane and is at least partially exposed.

8. The fixing structure of an electrode terminal (50, 50') according to claim 5,
wherein the hot-melt layer (HM1) is located at the interface between the inner flange portion (50c, 53c) and the inner gasket (54b) and is at least partially exposed.

9. The fixing structure of an electrode terminal (50, 50') according to claim 5,
wherein the hot-melt layer (HM1) is located at the interface between the outer flange portion (50b) and the outer gasket (54a) and is at least partially exposed.

10. The fixing structure of an electrode terminal (50, 50') according to claim 1,
wherein the hot-melt layer (HM1, HM2) is formed by hardening a hot-melt film with heat.

11. The fixing structure of an electrode terminal (50, 50') according to claim 1,
wherein the hot-melt layer (HM1, HM2) is formed by hardening a hot-melt coating layer with heat.

12. The fixing structure of an electrode terminal (50, 50') according to claim 10 or 11,
wherein the hot-melt layer (HM1, HM2) is made of silicone-based, epoxy-based, acrylic-based or urethane-based hot-melt material.

13. A battery (40, 70, 201), comprising:
an electrode assembly (71, 100) in which a first electrode and a second electrode are wound with a separator (12) interposed therebetween;
a battery housing (41, 51) configured to accommodate the electrode assembly (71, 100) and electrically connected to the first electrode;
an electrode terminal (50, 50') installed through a perforation hole (53) formed in a bottom portion (52) of the battery housing (41, 51) not to contact an inner wall of the perforation hole (53) and electrically connected to the second electrode, the electrode terminal (50, 50') including:
a body portion (50a, 151) inserted into the perforation hole (53);
an outer flange portion (50b) configured to extend from a first side of the body portion (50a, 151) along an outer surface (20a, 52a) of the bottom portion (52) of the battery housing (41, 51); and
an inner flange portion (50c, 53c) configured to at least partially extend from a second side of the body portion (50a, 151) to face an inner surface (52b) of the bottom portion (52) of the battery housing (41, 51);
a terminal gasket (54) interposed between the electrode terminal (50, 50') and the perforation hole (53); and
a sealing body (42, 74) configured to seal an open end of the battery housing (41, 51) to enable insulation from the battery housing (41, 51),
wherein a hot-melt layer (HM1, HM2) is interposed at an interface between the electrode terminal (50, 50') and the terminal gasket (54) or an interface between the terminal gasket (54) and the battery housing (41, 51).

14. The battery (40, 70, 201) according to claim 13,
wherein the electrode terminal (50, 50') includes a welding portion on an inner side of the inner flange portion (50c, 53c).

15. The battery (40, 70, 201) according to claim 14,
wherein the welding portion has a flat surface.

16. A battery pack (200), comprising a plurality of batteries (40, 70, 201) according to any one of claims 13 to 15.

17. A vehicle, comprising the battery pack (200) according to claim 16.

## Patentansprüche

1. Befestigungsstruktur eines Elektrodenanschlusses (50, 50'), umfassend:
ein Batteriegehäuse (41, 51) mit einem offenen Ende und einem Bodenabschnitt (52), in dem ein Perforationsloch (53) ausgebildet ist;
einen Elektrodenanschluss (50, 50'), der durch das Perforationsloch (53) so installiert ist, dass er eine Innenwand des Perforationslochs (53) nicht berührt;
eine Anschlussdichtung (54), die zwischen dem Elektrodenanschluss (50, 50') und dem Perforationsloch (53) angeordnet ist; und
eine Heißschmelzschicht (HM1, HM2), die an einer Grenzfläche zwischen dem Elektrodenanschluss (50, 50') und der Anschlussdichtung (54) oder einer Grenzfläche zwischen der Anschlussdichtung (54) und dem Batteriegehäuse (41, 51) angeordnet ist.

2. Befestigungsstruktur eines Elektrodenanschlusses (50, 50') nach Anspruch 1,
wobei der Elektrodenanschluss (50, 50') umfasst:
einen Körperabschnitt (50a, 151), der in das Perforationsloch (53) eingesetzt ist;
einen äußeren Flanschabschnitt (50b), der so konfiguriert ist, dass er sich von einer ersten Seite des Körperabschnitts (50a, 151) entlang einer Außenfläche (20a, 52a) des Bodenabschnitts (52) des Batteriegehäuses (41, 51) erstreckt; und
einen inneren Flanschabschnitt (50c, 53c), der so konfiguriert ist, dass er sich zumindest teilweise von einer zweiten Seite des Körperabschnitts (50a, 151) erstreckt, um dem Bodenabschnitt (52) des Batteriegehäuses (41, 51) zugewandt zu sein und die Anschlussdichtung (54) zusammenzudrücken.

3. Befestigungsstruktur eines Elektrodenanschlusses (50, 50') nach Anspruch 2,
wobei ein Schweißabschnitt an einer Innenseite des inneren Flanschabschnitts (50c, 53c) vorgesehen ist.

4. Befestigungsstruktur eines Elektrodenanschlusses (50, 50') nach Anspruch 3,
wobei der Schweißabschnitt eine flache Oberfläche aufweist.

5. Befestigungsstruktur eines Elektrodenanschlusses (50, 50') nach Anspruch 2,
wobei die Anschlussdichtung (54) umfasst:
eine äußere Dichtung (54a), die zwischen dem äußeren Flanschabschnitt (50b) und einer ersten Ebene angeordnet ist, in der sich die Außenfläche (20a, 52a) des Bodenabschnitts (52) des Batteriegehäuses (41, 51) befindet;
eine innere Dichtung (54b), die zwischen dem inneren Flanschabschnitt (50c, 53c) und einer zweiten Ebene angeordnet ist, in der sich eine Innenfläche (52b) des Bodenabschnitts (52) des Batteriegehäuses (41, 51) befindet; und
eine Zwischendichtung (54c), die zwischen dem Körperabschnitt (50a, 151) und dem Perforationsloch (53) angeordnet ist und konfiguriert ist, um die äußere Dichtung (54a) und die innere Dichtung (54b) zu verbinden.

6. Befestigungsstruktur eines Elektrodenanschlusses (50, 50') nach Anspruch 5,
wobei sich die Heißschmelzschicht (HM1) an der Grenzfläche zwischen der äußeren Dichtung (54a) und der ersten Ebene befindet und zumindest teilweise freiliegt.

7. Befestigungsstruktur eines Elektrodenanschlusses (50, 50') nach Anspruch 5,
wobei sich die Heißschmelzschicht (HM2) an der Grenzfläche zwischen der inneren Dichtung (54b) und der zweiten Ebene befindet und zumindest teilweise freiliegt.

8. Befestigungsstruktur eines Elektrodenanschlusses (50, 50') nach Anspruch 5,
wobei sich die Heißschmelzschicht (HM1) an der Grenzfläche zwischen dem inneren Flanschabschnitt (50c, 53c) und der inneren Dichtung (54b) befindet und zumindest teilweise freiliegt.

9. Befestigungsstruktur eines Elektrodenanschlusses (50, 50') nach Anspruch 5,
wobei sich die Heißschmelzschicht (HM1) an der Grenzfläche zwischen dem äußeren Flanschabschnitt (50b) und der äußeren Dichtung (54a) befindet und zumindest teilweise freiliegt.

10. Befestigungsstruktur eines Elektrodenanschlusses (50, 50') nach Anspruch 1,
wobei die Heißschmelzschicht (HM1, HM2) durch Härten eines Heißschmelzfilms mit Wärme gebildet wird.

11. Befestigungsstruktur eines Elektrodenanschlusses (50, 50') nach Anspruch 1,
wobei die Heißschmelzschicht (HM1, HM2) durch Härten einer Heißschmelzbeschichtungsschicht mit Wärme gebildet wird.

12. Befestigungsstruktur eines Elektrodenanschlusses (50, 50') nach Anspruch 10 oder 11,
wobei die Heißschmelzschicht (HM1, HM2) aus einem Heißschmelzmaterial auf Silikonbasis, Epoxidbasis, Acrylbasis oder Urethanbasis hergestellt ist.

13. Batterie (40, 70, 201), umfassend:
eine Elektrodenanordnung (71, 100), in der eine erste Elektrode und eine zweite Elektrode mit einem dazwischen angeordneten Separator (12) gewickelt sind;
ein Batteriegehäuse (41, 51), das konfiguriert ist, um die Elektrodenanordnung (71, 100) aufzunehmen und elektrisch mit der ersten Elektrode verbunden ist;
einen Elektrodenanschluss (50, 50'), der durch ein Perforationsloch (53) installiert ist, das in einem Bodenabschnitt (52) des Batteriegehäuses (41, 51) ausgebildet ist, um eine Innenwand des Perforationslochs (53) nicht zu berühren, und elektrisch mit der zweiten Elektrode verbunden ist, wobei der Elektrodenanschluss (50, 50') umfasst:
einen Körperabschnitt (50a, 151), der in das Perforationsloch (53) eingesetzt ist;
einen äußeren Flanschabschnitt (50b), der so konfiguriert ist, dass er sich von einer ersten Seite des Körperabschnitts (50a, 151) entlang einer Außenfläche (20a, 52a) des Bodenabschnitts (52) des Batteriegehäuses (41, 51) erstreckt; und
einen inneren Flanschabschnitt (50c, 53c), der so konfiguriert ist, dass er sich zumindest teilweise von einer zweiten Seite des Körperabschnitts (50a, 151) erstreckt, um einer Innenfläche (52b) des Bodenabschnitts (52) des Batteriegehäuses (41, 51) zugewandt zu sein;
eine Anschlussdichtung (54), die zwischen dem Elektrodenanschluss (50, 50') und dem Perforationsloch (53) angeordnet ist; und
einen Dichtungskörper (42, 74), der so konfiguriert ist, dass er ein offenes Ende des Batteriegehäuses (41, 51) abdichtet, um eine Isolierung von dem Batteriegehäuse (41, 51) zu ermöglichen,
wobei eine Heißschmelzschicht (HM1, HM2) an einer Grenzfläche zwischen dem Elektrodenanschluss (50, 50') und der Anschlussdichtung (54) oder einer Grenzfläche zwischen der Anschlussdichtung (54) und dem Batteriegehäuse (41, 51) angeordnet ist.

14. Batterie (40, 70, 201) nach Anspruch 13,
wobei der Elektrodenanschluss (50, 50') einen Schweißabschnitt an einer Innenseite des inneren Flanschabschnitts (50c, 53c) umfasst.

15. Batterie (40, 70, 201) nach Anspruch 14,
wobei der Schweißabschnitt eine flache Oberfläche aufweist.

16. Batteriepack (200), umfassend eine Vielzahl von Batterien (40, 70, 201) nach einem der Ansprüche 13 bis 15.

17. Fahrzeug, umfassend den Batteriepack (200) nach Anspruch 16.

## Revendications

1. Structure de fixation d'une borne d'électrode (50, 50'), comprenant :
un boîtier de batterie (41, 51) possédant une extrémité ouverte et une partie inférieure (52) dans laquelle un orifice de perforation (53) a été pratiqué ;
une borne d'électrode (50, 50') installée à travers l'orifice de perforation (53) de façon à ne pas entrer en contact avec une paroi intérieure de l'orifice de perforation (53) ; et
un joint de borne (54) intercalé entre la borne d'électrode (50, 50') et l'orifice de perforation (53) ; et
une couche thermo-fusible (HM1, HM2) intercalée à une interface entre la borne d'électrode (50, 50') et le joint de borne (54), ou une interface entre le joint de borne (54) et le boîtier de batterie (41, 51).

2. Structure de fixation d'une borne d'électrode (50, 50') selon la revendication 1,
la borne d'électrode (50, 50') comprenant :
une partie de corps (50a, 151) insérée dans l'orifice de perforation (53);
une partie de bride extérieure (50b) configurée pour s'étendre d'un premier côté de la partie de corps (50a, 151) le long d'une surface extérieure (20a, 52a) de la partie inférieure (52) du boîtier de batterie (41, 51); et
une partie de bride intérieure (50c, 53c) configurée pour s'étendre au moins partiellement d'un deuxième côté de la partie de corps (50a, 151) de façon à faire face à la partie inférieure (52) du boîtier de batterie (41, 51), et à comprimer le joint de borne (54).

3. Structure de fixation d'une borne d'électrode (50, 50') selon la revendication 2,
une partie de soudage étant agencée sur un côté intérieur de la partie de bride intérieure (50c, 53c).

4. Structure de fixation d'une borne d'électrode (50, 50') selon la revendication 3,
la partie de soudage possédant une surface plate.

5. Structure de fixation d'une borne d'électrode (50, 50') selon la revendication 2,
le joint de borne (54) comprenant :
un joint extérieur (54a) intercalé entre la partie de bride extérieure (50b) et un premier plan où se trouve la surface extérieure (20a, 52a) de la partie inférieure (52) du boîtier de batterie (41, 51) ;
un joint intérieur (54b) intercalé entre la partie de bride intérieure (50c, 53c) et un deuxième plan où se trouve une surface intérieure (52b) de la partie inférieure (52) du boîtier de batterie (41, 51) ; et
un joint intermédiaire (54c) intercalé entre la partie de corps (50a, 151) et l'orifice de perforation (53), et configuré pour connecter le joint extérieur (54a) et le joint intérieur (54b).

6. Structure de fixation d'une borne d'électrode (50, 50') selon la revendication 5,
la couche thermo-fusible (HM1) étant située à l'interface entre le joint extérieur (54a) et le premier plan, et étant exposée au moins partiellement.

7. Structure de fixation d'une borne d'électrode (50, 50') selon la revendication 5,
la couche thermo-fusible (HM2) étant située à l'interface entre le joint intérieur (54b) et le deuxième plan, et étant exposée au moins partiellement.

8. Structure de fixation d'une borne d'électrode (50, 50') selon la revendication 5,
la couche thermo-fusible (HM1) étant située à l'interface entre la partie de bride intérieure (50c, 53c) et le joint intérieur (54b), et étant exposée au moins partiellement.

9. Structure de fixation d'une borne d'électrode (50, 50') selon la revendication 5,
la couche thermo-fusible (HM1) étant située à l'interface entre la partie de bride extérieure (50b) et le joint extérieur (54a), et étant exposée au moins partiellement.

10. Structure de fixation d'une borne d'électrode (50, 50') selon la revendication 1,
la couche thermo-fusible (HM1, HM2) étant formée par durcissement à la chaleur d'un film thermo-fusible.

11. Structure de fixation d'une borne d'électrode (50, 50') selon la revendication 1,
la couche thermo-fusible (HM1, HM2) étant formée par durcissement à la chaleur d'un couche de revêtement thermo-fusible.

12. Structure de fixation d'une borne d'électrode (50, 50') selon la revendication 10 ou 11,
la couche thermo-fusible (HM1, HM2) étant réalisée avec une matière thermo-fusible à base de silicone, à base époxy, à base acrylique, ou à base d'uréthane.

13. Batterie (40, 70, 201), comprenant :
un ensemble d'électrodes (71, 100) dans lequel une première électrode et une deuxième électrode sont enroulées avec un séparateur (12) intercalé entre elles ;
un boîtier de batterie (41, 51) configuré pour contenir l'ensemble d'électrodes (71, 100), et connecté électriquement à la première électrode ;
une borne d'électrode (50, 50') installée à travers un orifice de perforation (53) formé dans une partie inférieure (52) du boîtier de batterie (41, 51) de façon à ne pas entrer en contact avec une paroi intérieure de l'orifice de perforation (53), et connectée électriquement à la deuxième électrode, la borne d'électrode (50, 50') comprenant :
une partie de corps (50a, 151) insérée dans l'orifice de perforation (53) ;
une partie de bride extérieure (50b) configurée pour s'étendre depuis un premier côté de la partie de corps (50a, 151) le long d'une surface extérieure (20a, 52a) de la partie inférieure (52) du boîtier de batterie (41, 51) ; et
une partie de bride intérieure (50c, 53c) configurée pour s'étendre au moins partiellement depuis un deuxième côté de la partie de corps (50a, 151) afin de faire face à une surface intérieure (52b) de la partie inférieure (52) du boîtier de batterie (41, 51) ;
un joint de borne (54) intercalé entre la borne d'électrode (50, 50') et l'orifice de perforation (53) ; et
un corps d'étanchéité (42, 74) configuré pour sceller un bout ouvert du boîtier de batterie (41, 51) afin de pouvoir l'isoler du boîtier de batterie (41, 51) ;
une couche thermo-fusible (HM1, HM2) étant intercalée à une interface entre la borne d'électrode (50, 50') et le joint de borne (54) ou une interface entre le joint de borne (54) et le boîtier de batterie (41, 51)

14. Batterie (40, 70, 201) selon la revendication 13,
la borne d'électrode (50, 50') comprenant une partie de soudage sur un côté intérieur de la partie de borne intérieure (50c, 53c).

15. Batterie (40, 70, 201) selon la revendication 14,
la partie de soudage possédant une surface plate.

16. Bloc-batterie (200), comprenant une pluralité de batteries (40, 70, 201) selon une quelconque des revendications 13 à 15.

17. Véhicule comprenant le bloc-batterie (200) selon la revendication 16.
